(19) Europäisches Patentamt
European Patent Office
Office européen des brevets

(11) **EP 3 613 186 B1**

(12) **FASCICULE DE BREVET EUROPEEN**

(45) Date de publication et mention
de la délivrance du brevet:
**06.01.2021 Bulletin 2021/01**

(21) Numéro de dépôt: **18720342.7**

(22) Date de dépôt: **17.04.2018**

(51) Int Cl.:
***H04L 29/06*** *(2006.01)*     ***H04L 9/08*** *(2006.01)*

(86) Numéro de dépôt international:
**PCT/FR2018/050963**

(87) Numéro de publication internationale:
**WO 2018/193203 (25.10.2018 Gazette 2018/43)**

(54) **SYSTÈME ET PROCÉDÉ DE COMMUNICATIONS**

KOMMUNIKATIONSSYSTEM UND -VERFAHREN

COMMUNICATION SYSTEM AND METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.04.2017 FR 1753396**

(43) Date de publication de la demande:
**26.02.2020 Bulletin 2020/09**

(73) Titulaire: **ORANGE**
**75015 Paris (FR)**

(72) Inventeurs:
• **BALA, Suman**
**92326 Châtillon Cedex (FR)**
• **GHAROUT, Saïd**
**92326 Châtillon Cedex (FR)**
• **BARTHEL, Dominique**
**92326 Châtillon Cedex (FR)**

(56) Documents cités:
• **N. Sornin ET AL: "LoRaWAN(TM) Specification V1.0.2", , 31 juillet 2016 (2016-07-31), XP055423468, Extrait de l'Internet: URL:https://www.lora-alliance.org [extrait le 2017-11-09]**
• **Olivier Hersent ET AL: "LoRa Device Developer Guide", Orange Connected Objects & Partnerships, 30 avril 2016 (2016-04-30), XP055286484, Extrait de l'Internet: URL:https://partner.orange.com/wp-content/ uploads/2016/04/LoRa-Device-Developer-Guid e-Orange.pdf [extrait le 2016-07-06]**
• **Lora Alliance: "LoRaWAN Security - Frequently Asked Questions", , 31 juillet 2016 (2016-07-31), XP055406408, Extrait de l'Internet: URL:https://docs.wixstatic.com/ugd/eccc1a_ a21c979333bf40878eb34f816670906f.pdf [extrait le 2017-09-13]**

**Description**

Arrière-plan de l'invention

L'invention se rapporte au domaine général des télécommunications.

Elle concerne plus particulièrement une architecture d'un système de communication dans lequel un terminal communique avec un serveur d'application apte à fournir des services applicatifs à ce terminal par l'intermédiaire d'un réseau de télécommunications, et plus particulièrement d'un serveur de ce réseau. Aucune limitation n'est attachée à la nature du terminal ni à la nature des services applicatifs fournis. Le terminal peut être un terminal fixe ou mobile, tel qu'un compteur électrique, un capteur, etc. Le serveur d'application peut être opéré par un fournisseur de services quelconque, comme par exemple un fournisseur d'électricité, d'eau, de services postaux, etc.

L'invention a ainsi une application privilégiée mais non limitative dans le contexte de l'Internet des objets, et notamment des architectures ou réseaux étendus de type LoRaWAN (pour Long Range Wide Area Network) par exemple. De façon connue, le protocole actuellement en cours de standardisation LoRaWAN permet une communication radio à bas débit (inférieurs à 50 kbit/s) et à faible consommation d'énergie, d'objets communiquant selon la technologie LoRA (pour « Long Range »), et connectés à Internet via un réseau de télécommunications.

Dans une architecture de type LoRaWAN, chaque terminal (aussi désigné par nœud) est amené à communiquer avec un serveur d'application via un réseau de télécommunications. Plus particulièrement, les données transmises par chaque terminal sont reçues par une pluralité de passerelles ou stations de base qui les relaient vers un serveur du réseau. Ce serveur du réseau filtre les messages reçus des terminaux (et vérifient notamment leur provenance et leur intégrité), et les retransmet aux serveurs d'application concernés.

Les architectures LoRaWAN mettent en œuvre deux mécanismes de sécurité, un au niveau du réseau et un au niveau « applicatif ». Le mécanisme de sécurité implémenté au niveau réseau consiste à s'assurer d'une part de l'authenticité du terminal communiquant, et d'autre part à s'assurer de l'authenticité et de l'intégrité des messages qu'il émet. Le mécanisme de sécurité mis en œuvre au niveau applicatif vise à assurer la confidentialité des échanges entre le terminal et le serveur d'application avec lequel il communique, notamment vis-à-vis de l'opérateur du réseau de télécommunications sur lequel sont véhiculés les messages. Ces mécanismes de sécurité s'appuient, dans les versions actuelles du protocole LoRaWAN, sur l'algorithme connu de chiffrement cryptographique symétrique AES (pour Advanced Encryption Standard).

Dans la version 1.0 du protocole LoRaWAN, une unique clé cryptographique dite racine (ou maîtresse) est utilisée pour générer deux clés dites de session, l'une étant utilisée au niveau réseau (clé de session dite réseau) pour signer et vérifier l'intégrité des messages émis ou destinés au terminal, l'autre étant utilisée au niveau applicatif (clé de session dite applicative) pour chiffrer/déchiffrer les données utiles envoyées ou reçues par le terminal. A cet effet, la clé racine est stockée au niveau du terminal et au niveau du serveur du réseau. Le terminal envoie une requête de connexion (« join request ») au serveur du réseau pour l'activation d'une session. En réponse à cette requête, le serveur du réseau envoie une réponse d'acceptation de la connexion (« join accept ») et génère deux clés de session, à savoir une clé de session réseau et une clé de session applicative.

Le serveur du réseau dispose donc de la connaissance de la clé de session applicative utilisée pour chiffrer les échanges (et notamment les données utiles) entre le terminal et le serveur d'application concerné. Ceci pose un problème de confidentialité des données échangées au niveau applicatif vis-à-vis de l'opérateur du réseau de télécommunications.

Objet et résumé de l'invention

L'invention permet de pallier notamment l'inconvénient précité en proposant un système de communications comprenant :

- un terminal ;
- un serveur d'un réseau de télécommunications (aussi parfois désigné par « serveur de réseau » dans la suite de la description), apte à fournir au moins un service réseau au terminal ; et
- au moins un serveur d'application, apte à fournir des services applicatifs au terminal via le réseau de télécommunications et le serveur du réseau de télécommunications ;

le système étant remarquable en ce que :

- le terminal et le serveur du réseau partagent et stockent une même clé racine dite réseau maintenue secrète à l'égard du serveur d'application, et sont configurés pour générer à partir de cette clé racine réseau au moins une clé de session réseau destinée à être utilisée pour signer et vérifier l'intégrité de messages échangés sur le réseau entre le terminal et le serveur du réseau ; et
- le terminal et le serveur d'application partagent et stockent une même clé racine dite applicative maintenue secrète à l'égard du serveur du réseau, et sont configurés pour générer à partir de cette clé racine applicative au moins une clé de session applicative destinée à être utilisée pour chiffrer et déchiffrer des messages échangés entre le terminal et ce serveur d'application via le réseau.

Par « clé maintenue secrète à l'égard d'un serveur », on entend que cette clé n'est à aucun moment divulguée audit serveur. Typiquement, à aucun moment, cette clé n'est échangée ou envoyée dans un message destiné ou transitant par ce serveur.

L'invention propose ainsi une nouvelle approche pour la gestion des clés racines réseau et applicative selon laquelle ces clés sont gérées et détenues séparément par le serveur du réseau et par le serveur d'application respectivement. Elles sont avantageusement maintenues secrètes à l'égard de l'autre serveur, i.e. la clé racine réseau est partagée uniquement entre le serveur de réseau et le terminal et est maintenue secrète à l'égard du serveur d'application, tandis que la clé racine applicative est partagée uniquement entre le serveur d'application et le terminal et est maintenue secrète à l'égard du serveur du réseau.

De cette sorte, les clés de session réseau et applicative peuvent être générées de manière indépendante l'une de l'autre (i.e. découplées) par les serveurs réseau et d'application respectivement, et rester secrètes à l'égard de l'autre serveur. Les problèmes de confidentialité des données applicatives présents dans l'état de la technique à l'égard de l'opérateur du réseau de télécommunications sont ainsi résolus.

L'architecture proposée par l'invention offre donc une solution sécurisée de bout en bout, entre le terminal et le serveur du réseau pour la partie réseau, et entre le terminal et le serveur d'application pour la partie applicative, dans laquelle chaque acteur (opérateur du réseau ou fournisseur de services) est assuré de la protection de la confidentialité de ses données. L'opérateur du réseau de télécommunications reste en outre maître de contrôler l'accès à son réseau comme il est le seul à connaître les clés racines réseau associées à chaque terminal. On suppose bien entendu que par ailleurs, une interface sécurisée est établie entre le serveur du réseau et le serveur d'application permettant un échange sécurisé et confidentiel de données entre ces deux serveurs.

On note que l'invention, bien que présentant de nombreux avantages dans le contexte de systèmes de communication comprenant un terminal, un serveur de réseau et au moins un serveur d'application configurés pour mettre en œuvre le protocole LoRaWAN, s'applique également à d'autres architectures de réseaux qui s'appuient sur deux types de serveurs comme dans l'invention pour fournir d'une part des services réseau et d'autre part des services applicatifs. De telles architectures de réseau comprennent par exemple les architectures de réseau connues SigFox, Weightless, NWave, ou encore WM-bus.

L'indépendance des clés racines réseau et applicative et leur gestion distincte par les serveurs de réseau et d'application qui les maintiennent secrètes à l'égard l'un de l'autre permettent de conduire indépendamment l'une de l'autre, c'est-à-dire de manière découplée, la procédure de connexion du terminal au réseau et la procédure de connexion du terminal au serveur d'application. Typiquement, ces procédures peuvent être menées l'une après l'autre, la procédure de connexion au réseau étant réalisée en premier pour pouvoir utiliser le réseau pour l'échange des données applicatives.

Ainsi, dans un mode particulier de l'invention :

- le terminal et le serveur du réseau sont configurés pour générer une dite clé de session réseau lors d'une procédure de connexion dite réseau du terminal au réseau ;
- le terminal et ledit serveur d'application sont configurés pour générer une dite clé de session applicative lors d'une procédure de connexion dite applicative du terminal à ce serveur d'application, ladite procédure de connexion applicative étant déclenchée par le terminal après l'accomplissement de la procédure de connexion réseau.

Corrélativement, l'invention vise un procédé de communication, au sein d'un système de communications comprenant un terminal, un serveur d'un réseau de télécommunications apte à fournir au moins un service réseau au terminal, et au moins un serveur d'application apte à fournir des services applicatifs au terminal via le réseau de télécommunications et le serveur du réseau de télécommunications, ce procédé de communication comprenant :

- une première étape de connexion du terminal au serveur du réseau comprenant une génération par le terminal et par le serveur du réseau d'une clé de session dite réseau à partir de la clé racine réseau partagée entre le terminal et le serveur du réseau et maintenue secrète à l'égard du serveur d'application, cette clé de session réseau étant destinée à être utilisée pour signer et vérifier l'intégrité de messages échangés sur le réseau entre le terminal et le serveur du réseau ;
- une deuxième étape de connexion du terminal au serveur d'application, cette deuxième étape de connexion comprenant une génération par le terminal et par le serveur d'application d'une clé de session dite applicative à partir de la clé racine applicative partagée entre le terminal et le serveur d'application et maintenue secrète à l'égard du serveur du réseau, cette clé de session applicative étant destinée à être utilisée pour chiffrer et déchiffrer des messages échangés entre le terminal et ce serveur d'application via le réseau ;

ladite au moins une deuxième étape de connexion étant mise en œuvre après l'accomplissement de la première étape de connexion.

Dans un mode de réalisation particulier, le terminal et le serveur du réseau sont configurés pour générer au moins une dite clé de session réseau à partir de la clé racine réseau lors d'une procédure de rafraîchissement de session du terminal.

L'invention offre en outre la possibilité de (re)générer aisément et librement des clés de session, c'est-à-dire autant que nécessaire (i.e. de nouvelles clés à chaque nouvelle session établie avec le terminal ou pour chaque rafraichissement de session) et si besoin, pour une durée de validité limitée. Ainsi, les clés de session peuvent être « prêtées » ou partagées pendant une durée de temps limitée avec d'autres entités de confiance pour déléguer par exemple certains contrôles effectués sur les messages échangés avec le terminal (par exemple dans des situations d'itinérance ou de « roaming » en anglais), sans toutefois affecter durablement la sécurité du système de communication. A l'expiration de la durée limitée, une nouvelle clé de session peut être générée par le serveur du réseau ou par le serveur d'application grâce à la clé racine correspondante, rendant caduque et impossible l'utilisation de l'ancienne clé de session.

Dans un autre mode de réalisation, les clés de session réseau et applicative peuvent avoir été générées et être stockées préalablement auprès des entités concernées.

L'invention permet en outre à un terminal plusieurs sessions de communication avec plusieurs serveurs d'application distinctes via le même serveur de réseau et lors d'une même session réseau.

Par exemple, dans un mode particulier de réalisation, le terminal est apte à établir et à maintenir des connexions simultanées avec une pluralité de serveurs d'application.

A cet effet, lorsque le système comprend une pluralité de serveurs d'applications, le terminal peut partager des clés racines applicatives distinctes avec ladite pluralité de serveurs d'application, chaque clé racine partagée avec un dit serveur d'application étant maintenue secrète à l'égard des autres serveurs d'application de ladite pluralité de serveurs d'application.

En imposant le partage d'une clé racine applicative distincte entre le terminal et chaque serveur d'application, il est possible au terminal de communiquer simultanément avec plusieurs serveurs d'application tout en garantissant la confidentialité des échanges à l'égard de chaque serveur d'application. Un même terminal peut donc établir aisément des sessions applicatives avec différents fournisseurs de services, via un même réseau de télécommunications, sans risquer de compromettre la confidentialité des échanges avec ces fournisseurs de services.

Pour ce faire, dans un mode particulier de réalisation :

- le terminal est configuré pour envoyer une requête unique au serveur du réseau pour se connecter à ladite pluralité de serveurs d'application, cette requête unique comprenant un identifiant de chaque serveur d'application de ladite pluralité de serveurs d'application ; et
- le serveur du réseau est configuré pour envoyer, suite à la réception de la requête unique, une pluralité de requêtes à ladite pluralité de serveurs d'application, la requête envoyée à un dit serveur d'application étant une requête de connexion du terminal à ce serveur d'application.

Le serveur de réseau est capable, à partir des identifiants contenus dans la requête unique, de faire suivre la requête de connexion du terminal vers les serveurs d'application concernés. On note que les requêtes de connexion aux serveurs d'application peuvent être envoyées simultanément par le serveur de réseau aux différents serveurs d'application ou à des instants différents.

La requête unique envoyée au serveur de réseau et chaque requête de connexion distincte envoyée à chacun des serveurs d'application peuvent s'appuyer sur des requêtes similaires aux requêtes déjà prévues par le protocole LoRaWAN (adaptées le cas échéant pour la mise en œuvre de l'invention), et ladite pluralité de serveurs d'application comprend au plus trois serveurs d'application distincts. Ce mode de réalisation spécifique exploite la taille des messages et les débits disponibles d'après le protocole LoRaWAN pour mutualiser les requêtes de connexion d'un terminal auprès de plusieurs (au plus trois dans les conditions actuelles permises par le protocole LoRaWAN) serveurs d'applications.

En variante, d'autres messages peuvent être introduits pour mettre en œuvre ce mode de réalisation, ou d'autres champs dans ces messages, et permettre une connexion à plus de trois serveurs d'application distincts.

Ce mode de réalisation permet donc de regrouper au sein d'une même requête la demande de connexion envoyée par le terminal à différents serveurs d'application. Lorsqu'un lien de communication radio existe entre le terminal et le serveur du réseau, ceci permet d'économiser les ressources de ce lien radio et de limiter la consommation du terminal.

Dans une variante de réalisation, le terminal peut envoyer des requêtes distinctes au serveur du réseau pour chacun des serveurs d'application, qui sont ensuite relayées par le serveur du réseau vers les serveurs d'applications concernés.

Dans un autre mode de réalisation, le terminal peut partager une même clé racine applicative avec plusieurs serveurs d'application, notamment lorsque ceux-ci sont opérés par le même fournisseur de services. Ce mode de réalisation permet de réduire la complexité d'implémentation de l'invention en limitant le nombre de clés racines distinctes stockées au niveau du terminal notamment.

Dans un mode particulier de réalisation, les étapes du procédé de communication sont déterminées par des instructions de programmes d'ordinateurs.

En conséquence, l'invention vise aussi un ou plusieurs programmes d'ordinateur sur un ou plusieurs support d'informations, ces programmes étant susceptibles d'être mis en œuvre dans un terminal, un serveur d'application et/ou un serveur de réseau, ou plus généralement dans un ordinateur, et comportant des instructions adaptées à la mise en œuvre des étapes d'un procédé de communication tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

Selon un autre aspect, l'invention vise également un terminal d'un système de communications comprenant ledit terminal, un serveur d'un réseau de télécommunications apte à fournir au moins un service réseau au terminal, et au moins un serveur d'application apte à fournir des services applicatifs au terminal via le réseau de télécommunications et le serveur du réseau de télécommunications, le terminal comprenant :

- un premier module de stockage d'une clé racine dite réseau partagée avec le serveur du réseau et maintenue secrète à l'égard dudit serveur d'application ;
- un premier module de génération, configuré pour générer à partir de cette clé racine réseau, au moins une clé de session dite réseau ;
- un module de signature et de vérification, configuré pour signer et/ou vérifier des messages échangés entre le terminal et le serveur du réseau au moyen de la clé de session réseau générée par le premier module de génération ;
- un deuxième module de stockage d'au moins une clé racine dite applicative partagée avec le serveur d'application, et maintenue secrète à l'égard du serveur du réseau ;
- un deuxième module de génération configuré pour obtenir au moins une clé de session dite applicative à partir de la clé racine applicative partagée avec le serveur d'application ; et
- un module de chiffrement et de déchiffrement, configuré pour chiffrer et/ou déchiffrer des messages échangés entre le terminal et le serveur d'application via le réseau au moyen de la clé de session applicative générée par le deuxième module de génération.

Aucune limitation n'est attachée à la nature des modules de stockage ; il peut s'agir d'une carte microSD, d'une carte UICC (Universal Integrated Circuit Card) comme par exemple une carte SIM (Subscriber Identity Module) ou USIM (Universal SIM), d'une carte eUICC (embedded Universal Integrated Circuit Card) appelée aussi eSIM, ou même d'une batterie munie d'une mémoire. Ces modules de stockage associés au terminal peuvent faire partie intégrante du terminal ou être amovibles.

Dans un mode particulier de réalisation :

- le premier module de stockage est compris dans un module d'interface réseau du terminal ; et
- le deuxième module de stockage est compris dans un module applicatif du terminal.

Via le recours à deux modules distincts d'interface réseau et applicatif, on permet un découplage simple lié directement à l'architecture du terminal, des procédures de connexion réseau et applicative mise en œuvre par le terminal avec le serveur de réseau et chaque serveur d'application.

Dans un mode particulier de réalisation, le premier module de génération est activé par le module d'interface réseau lors d'une procédure de connexion dite réseau du terminal au serveur du réseau, et le deuxième module de génération d'une clé de session applicative est activé par le module applicatif du terminal lors d'une procédure de connexion dite applicative du terminal au serveur d'application, cette procédure de connexion applicative étant mise en œuvre par le module applicatif après l'accomplissement de la procédure de connexion réseau.

Dans un mode particulier de réalisation, le système comprend une pluralité de serveurs d'application et le deuxième module de stockage comprend une pluralité de clés racines applicatives distinctes partagées avec ladite pluralité de serveurs d'application, chaque clé racine applicative partagée avec un dit serveur d'application étant maintenue secrète à l'égard des autres serveurs d'application de ladite pluralité de serveurs d'application.

Dans un autre mode de réalisation, le terminal comprend un module d'émission configuré pour envoyer une requête unique au serveur du réseau pour se connecter à ladite pluralité de serveurs d'application, cette requête unique comprenant un identifiant de chaque serveur d'application de ladite pluralité de serveurs d'application.

Dans un mode de réalisation alternatif, le terminal comprend un module d'émission configuré pour envoyer une pluralité de requêtes au serveur du réseau pour se connecter à ladite pluralité de serveurs d'application, chaque requête comprenant un identifiant d'un serveur d'application distinct de ladite pluralité de serveurs d'application.

Le terminal selon l'invention, dans tous les modes de réalisations précités, bénéficie des mêmes avantages que le système de communication et le procédé de communication selon l'invention.

On peut également envisager, dans d'autres modes de réalisation, que le procédé de communication, le système de communication et le terminal selon l'invention présentent en combinaison tout ou partie des caractéristiques précitées.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente, de façon schématique, un système de communication conforme à l'invention dans un mode particulier de réalisation ;
- la figure 2 représente le format des messages défini par le protocole LoRaWAN ;
- les figures 3 à 6 représentent différentes procédures exploitant l'architecture du système de communication de la figure 1 et s'appuyant sur le procédé de communication selon l'invention mis en œuvre par ce système de communication.

Description détaillée de l'invention

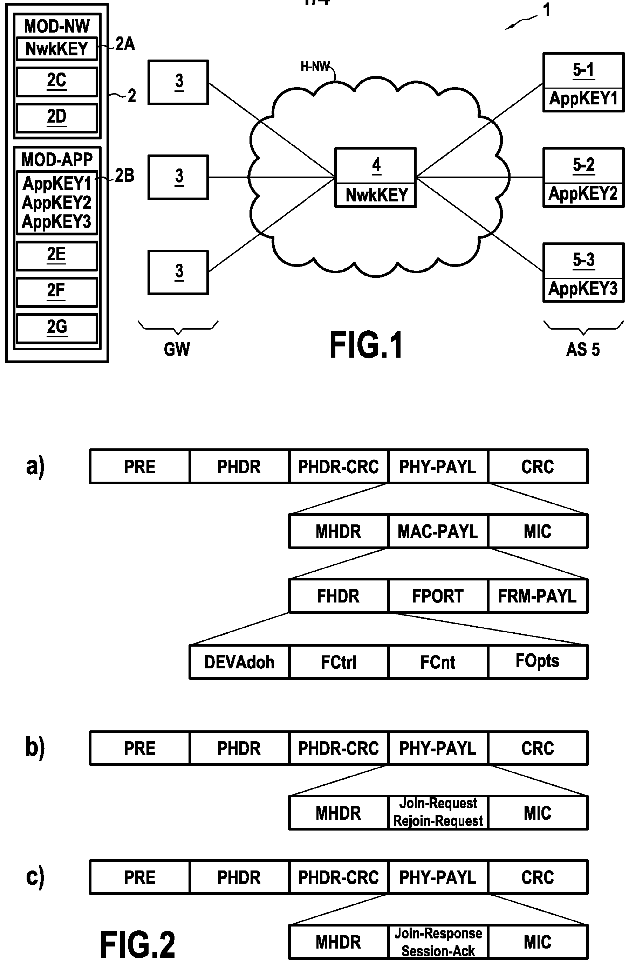

La **figure 1** représente, dans son environnement, un système de communication 1 conforme à l'invention, dans un mode particulier de réalisation.

Dans l'exemple envisagé à la figure 1, le système de communication 1 s'appuie sur un réseau de télécommunications étendu mettant en œuvre le protocole LoRaWAN. De façon connue, le protocole LoRaWAN est particulièrement bien adapté dans le contexte de l'Internet des objets pour permettre à divers objets communicants d'échanger entre eux. Aucune limitation n'est attachée à la nature des objets communicants. Il peut s'agir de terminaux divers tels que des capteurs, des actionneurs, ou tout autre type d'objet. De façon connue, de tels objets, par leurs contraintes matérielles et/ou logicielles, ne peuvent pas se connecter directement au réseau Internet pour accéder aux services applicatifs auxquels ils sont rattachés et communiquent avec ces services par l'intermédiaire d'un réseau de télécommunications selon une topologie en étoile.

Plus particulièrement ici, et conformément à l'architecture définie par le protocole LoRaWAN, le système de communication 1 comprend au moins un terminal communicant 2, conforme à l'invention, et configuré pour communiquer via un lien radio selon la technologie bas débit et basse consommation LoRa avec des passerelles ou stations de base 3 d'un réseau nominal H-NW. Les passerelles 3 relaient les messages reçus du terminal 2 à un serveur 4 du réseau nominal H-NW, chargé de filtrer et de contrôler l'intégrité et l'authenticité de ces messages avant de les transmettre aux serveurs d'application concernés 5. La figure 1 illustre trois serveurs d'application référencés par 5-1, 5-2 et 5-3. Toutefois aucune limitation n'est attachée au nombre de serveurs d'application.

Dans l'exemple envisagé à la figure 1, le terminal 2 est par exemple un compteur électrique et le serveur d'application 5 interagissant avec le terminal 2 (c'est-à-dire avec le compteur électrique 2), un serveur 5-1 d'un fournisseur d'électricité apte à traiter les données remontées par le compteur électrique 2 et à lui fournir un service applicatif. Ce service applicatif est par exemple l'élaboration à partir des données remontées d'une facture de consommation électrique correspondante, et la fourniture de cette facture à l'utilisateur rattaché au compteur électrique. L'utilisateur peut par ailleurs se voir fournir un historique détaillé de ses consommations sur un portail web du fournisseur d'électricité, etc.

Le réseau de télécommunications H-NW est ici, à titre illustratif, géré par un opérateur distinct du fournisseur d'électricité ; on suppose que l'opérateur du réseau de télécommunications H-NW et le fournisseur d'électricité gérant le serveur d'application 5-1 ont conclu un accord préalable assurant une connexion sécurisée entre le serveur 4 du réseau nominal H-NW et le serveur d'application 5-1.

Comme mentionné précédemment, dans les architectures de type LoRaWAN, la sécurité des échanges entre les terminaux et les serveurs d'application est assurée à deux niveaux distincts, i.e., au niveau réseau via divers contrôles d'intégrité réalisés par le serveur du réseau jouant les intermédiaires entre les terminaux et les serveurs d'application et par les terminaux eux-mêmes, et au niveau applicatif, via le chiffrement/déchiffrement des données applicatives échangées entre les terminaux et les serveurs d'application. Chacun de ces mécanismes s'appuie, lors de chaque session établie par un terminal avec un serveur d'application via le serveur du réseau, sur l'algorithme de chiffrement connu AES utilisé dans le protocole LoRaWAN paramétré tantôt au moyen de clés cryptographiques de session réseau, tantôt au moyen de clés cryptographiques de session applicatives. Ces clés cryptographiques sont ici de dimension 128 bits. On note toutefois que l'invention permet d'envisager aisément d'autres algorithmes de chiffrement symétriques que l'algorithme de chiffrement AES, ainsi que d'autres tailles de clés.

Conformément à l'invention, le serveur du réseau 4 stocke une clé cryptographique racine (ou maîtresse) dite réseau, notée NwkKEY, qu'il partage avec le terminal 2, cette clé racine réseau étant maintenue secrète entre ces deux dispositifs, et notamment à l'égard des serveurs d'application 5 (et du serveur d'application 5-1 plus spécifiquement ici). Cette clé racine réseau NwkKEY est stockée ici en dur (i.e. au niveau matériel) dans un espace sécurisé 2A du terminal 2 (premier module de stockage au sens de l'invention) et dans une mémoire du serveur 4 du réseau. L'espace sécurisé 2A est compris ici (ou plus généralement accessible par) dans un module d'interface réseau MOD-NW du terminal 2 configuré pour interagir avec le serveur du réseau 4.

Par ailleurs, conformément à l'invention, le serveur d'application 5-1 stocke une clé cryptographique racine dite applicative, notée AppKEY1, qu'il partage avec le terminal 2, cette clé racine applicative étant maintenue secrète entre ces deux dispositifs, et notamment à l'égard du serveur du réseau 4. Dans le mode de réalisation décrit ici, la clé racine applicative AppKEY1 est en outre propre au serveur d'application 5-1 et est maintenue secrète à l'égard des autres serveurs d'application 5-2 et 5-3. Cette clé applicative maîtresse AppKEY1 est stockée ici en dur (i.e. au niveau matériel) dans un espace sécurisé 2B du terminal 2 (deuxième module de stockage au sens de l'invention) et dans une mémoire du serveur d'application 5-1. L'espace sécurisé 2B du terminal 2 est compris ici (ou plus généralement accessible par) un module applicatif MOD-APP du terminal 2, configuré pour interagir avec le serveur d'application 5-1 par l'intermédiaire du serveur du réseau 4.

On note que comme détaillé davantage ultérieurement, l'invention permet à un même terminal d'établir des sessions simultanées avec plusieurs serveurs d'application (dans l'exemple de la figure 1 avec les serveurs 5-1, 5-2 et 5-3 notamment). A cet effet, l'espace sécurisé 2B peut contenir une pluralité de zones isolées les unes des autres, aussi appelées domaines de sécurité, associées à chacun des serveurs d'applications. Chaque domaine de sécurité contient la ou les clés applicatives associées à un même serveur d'application. Ceci permet avantageusement à chaque serveur d'application de personnaliser au niveau de chaque terminal son domaine de sécurité.

Dans le mode de réalisation décrit ici, cette gestion indépendante des clés racine réseau et applicative permet d'assurer un double niveau de sécurité via des procédures de connexion au serveur du réseau 4 et au(x) serveur(s) d'application 5 réalisées séparément et de façon indépendante, et au cours desquelles des clés de session réseau et applicatives sont générées séparément et indépendamment les unes des autres.

Plus précisément, dans le mode de réalisation décrit ici, les clés de session réseau sont générées lors d'une procédure de connexion du terminal 2 au serveur du réseau 4 (désignée dans la description par « procédure de connexion réseau ») à partir de la clé cryptographique racine réseau NwkKEY, partagée entre le terminal 2 et le serveur du réseau 4. Le terminal 2 et le serveur 4 du réseau H-NW sont configurés ici, comme décrit plus en détail ultérieurement, pour générer lors d'une procédure de connexion du terminal 2 au serveur 4 du réseau H-NW, deux clés de session réseau à partir de la clé racine réseau NwkKEY. Le terminal 2 comprend à cet effet, dans son module d'interface réseau MOD-NW, un module 2C de génération de clés de session réseau, activé lors de la procédure de connexion réseau et implémenté ici au niveau matériel. En variante pour d'autres types de terminaux, ce module peut être logiciel.

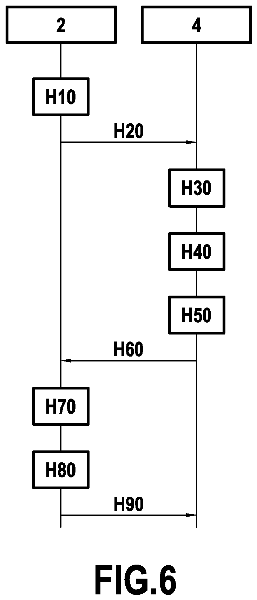

Les deux clés de session réseau générées comprennent une clé de session réseau notée NwkSKEYup pour les échanges en liaison montante (i.e. sens terminal 2 vers serveur 4), et une clé de session réseau notée NwkSKEYdown pour les échanges en liaison descendante (i.e. sens serveur 4 vers terminal 2). Ces deux clés de session sont partagées par le terminal 2 et le serveur 4 du réseau nominal H-NW et maintenues secrètes par ceux-ci (sauf cas particulier, comme décrit ultérieurement pour les situations d'itinérance ou de handover), notamment à l'égard des serveurs d'application 5. Dans le mode de réalisation décrit ici, le terminal 2 et le serveur 4 du réseau H-NW utilisent pour générer les clés de session réseau à partir de la clé racine réseau NwkKEY l'algorithme de chiffrement AES, de façon connue en soi et non décrite en détail ici. Toutefois, aucune limitation n'est attachée à la façon dont sont générées les clés de session réseau à partir de la clé racine réseau NwkKEY (ex. dérivée directement de la clé racine ou d'un certificat associé à cette clé racine, etc.). On note par ailleurs que le terminal 2 et le serveur 4 peuvent procéder de façon identique pour générer de nouvelles clés de session réseau lors d'une procédure de rafraichissement des clés de session, comme détaillé ultérieurement en référence à la figure 6 notamment.

Une fois les clés de session réseau générées par le terminal 2 et le serveur 4, ces deux entités (i.e. le terminal et le serveur) sont configurées pour utiliser ces clés pour signer et vérifier l'intégrité de messages qu'elles échangent sur le réseau nominal H-NW. Le terminal 2 utilise notamment à cet effet un module 2D de signature et de vérification, implémenté par exemple ici en matériel dans son module d'interface réseau MOD-NW. En variante, une implémentation logicielle peut être envisagée pour d'autres types de terminaux.

De façon similaire, une clé de session applicative est générée lors d'une procédure de connexion du terminal 2 au serveur d'application 5-1 (désignée dans la suite de la description par procédure de connexion applicative), à partir de la clé cryptographique racine applicative AppKEY1 partagée entre le terminal 2 et le serveur d'application 5-1. La clé de session applicative est partagée par le terminal 2 et le serveur d'application 5-1 et maintenue secrète par ceux-ci, notamment à l'égard du serveur 4 du réseau H-NW et également ici des autres serveurs d'application 5-2 et 5-3. Dans le mode de réalisation décrit ici, le terminal 2, via un module de génération 2E de clé de session applicative activé lors de la procédure de connexion applicative (ce module étant compris ici dans son module applicatif MOD-APP et implémenté en matériel), et le serveur d'application 5-1 utilisent pour générer la clé de session applicative à partir de la clé maîtresse applicative AppKEY1 l'algorithme AES de façon connue en soi et non décrite en détail ici. Toutefois, aucune limitation n'est attachée à la façon dont est générée la clé de session applicative à partir de la clé racine applicative AppKEY1 (ex. dérivée directement de la clé racine ou d'un certificat associé à cette clé racine, etc.).

Une fois la clé de session applicative générée par le terminal 2 et par le serveur d'application 5-1, ces deux entités (i.e. le terminal et le serveur d'application) sont configurées pour utiliser cette clé pour chiffrer et déchiffrer les messages contenant des données applicatives qu'elles échangent via le réseau nominal H-NW. Le terminal 2 utilise ici à cet effet un module 2F de chiffrement/déchiffrement implémenté en matériel dans son module applicatif MOD-APP. En variante, pour d'autres types de terminaux, ce module peut être implémenté en logiciel.

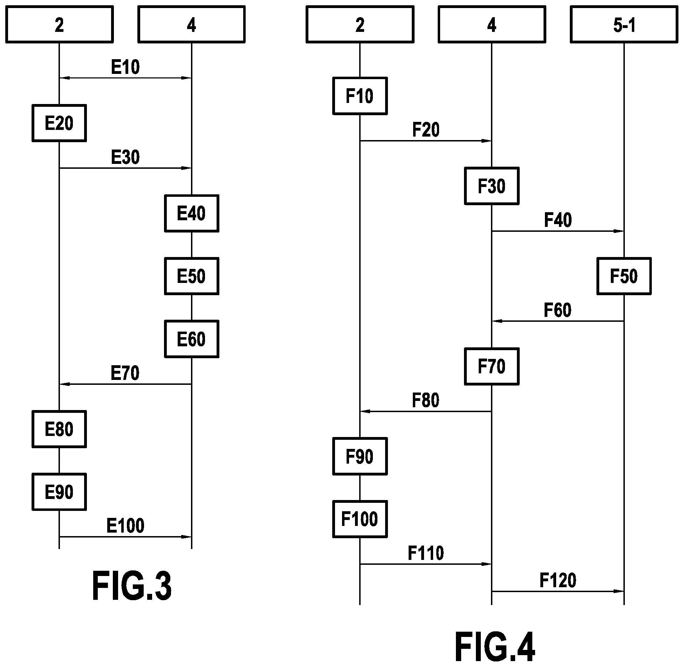

Comme mentionné précédemment, dans l'exemple envisagé ici, le terminal 2, le serveur de réseau 4 et les serveurs d'application 5 sont configurés pour implémenter le protocole LoRaWAN. Nous allons maintenant décrire plus en détail, en référence aux figures 2 à 6, comment l'architecture proposée par l'invention, qui s'appuie sur le stockage indépendant au niveau du serveur 4 du réseau nominal H-NW de la clé racine réseau NwkKEY (et incidemment des clés de session réseau générées à partir de cette clé racine réseau) et au niveau du serveur d'application 5-1 de la clé racine applicative AppKEY1 (et incidemment de la clé de session applicative générée à partir de cette clé racine applicative), peut s'articuler aisément avec les différentes procédures de connexion et de rafraichissement de clés de session prévues par le protocole LoRaWAN. On note que ces exemples d'application de l'invention ne sont donnés qu'à titre illustratif, et que l'invention peut également être appliquée en association avec d'autres procédures prévues par le protocole LoRaWAN, comme par exemple avec des procédures d'itinérance ou de handover. Les figures 3 à 6 illustrent les différentes étapes d'un procédé de communication selon l'invention tel qu'il est mis en œuvre par le système de communication 1 dans différents modes de réalisation pour permettre la mise en œuvre des procédures précitées.

Dans chacune de ces procédures, conformément à ce qui est mis en œuvre actuellement par le protocole LoRaWAN, les échanges entre les différentes entités du système de communication 1 s'appuient sur un format commun de message dont certains champs diffèrent en fonction du type du message (i.e. au niveau réseau ou applicatif, s'il s'agit d'une requête, d'une réponse ou d'un acquittement, etc.). Ce format est illustré à la **figure 2.**

Il comprend, pour la couche physique du modèle OSI (Open Systems Interconnection), un préambule PRE, un entête PHDR, un code de contrôle de parité de l'entête PHDR-CRC, des données utiles PHY-PAYL et un code de contrôle de parité des données utiles CRC (utilisé uniquement en voie montante).

Les données utiles PHY-PAYL contiennent des informations relatives à la couche MAC (Médium Access Control) du modèle OSI, à savoir :

- un entête MAC noté MHDR spécifiant notamment le type de message. Le protocole LoRaWAN définit actuellement plusieurs types de message, par exemple une requête de connexion « Join-Request » et un message d'acceptation de la requête « Join-Accept ». Conformément à l'invention, et comme indiqué précédemment, les procédures de connexion réseau et applicative sont découplées, de sorte que des types de message distincts sont préférentiellement définis pour chacune de ces procédures. Ainsi, de nouveaux types de message peuvent être utilisés dans l'entête MHDR comme par exemple une requête de connexion au réseau de type « Nwk-Join-Request », un message d'acceptation de la requête de connexion au réseau de type « Nwk-Join-Accept », une requête de connexion applicative à un serveur d'application unique de type « App-Join-Request » ou une requête de connexion unique à de multiples serveurs d'application « mAPP-Join-Request », un message d'acceptation de la requête de connexion au serveur d'application de type « App-Join-Accept » ou en cas de serveurs d'application multiples « mApp-Join-Accept », etc. ;
- des données utiles MAC-PAYL (cf. figure 2(a)) ; et
- un code d'intégrité du message MIC (Message Integrity Code), calculé sur l'ensemble des champs du message, à partir d'une clé de session réseau.

Les données utiles MAC-PAYL peuvent être remplacées par une requête de connexion (« Join-Request », cf. figure 2(b)), par une réponse de connexion (« Join-Response », cf. figure 2(c)), ou encore par une requête de rafraîchissement (« Rejoin-Request ») ou un acquittement (« Session-Ack »).

Les données utiles MAC-PAYL comprennent un entête de trame FHDR, un port de trame FPort qui permet de déterminer si le message transporte des commandes de service MAC (qui peuvent être échangées exclusivement entre le serveur du réseau et la couche MAC du terminal) ou des données applicatives, et des données utiles de trame FRM-PAYL. On note que les données utiles quelle que soit leur nature (applicatives ou de type commandes de service) sont toujours chiffrées. Si les données utiles de trame véhiculent des données applicatives, ce chiffrement est mis en œuvre avant de calculer le code MIC. Si les données utiles de trame transportent des commandes de service, le chiffrement est réalisé avec une clé de session de réseau ; sinon, il est réalisé avec la clé de session applicative.

Ce format commun de messages s'appuie sur le format décrit dans les documents de standardisation du protocole LoRaWAN, adapté lorsque cela est nécessaire pour la mise en œuvre de l'invention (cf. exemples évoqués ci-dessus). On note que certains champs ou valeurs de champs du message sont laissé(e)s libres dans la version 1.0 du protocole pouvant être exploités pour définir de nouveaux types de messages pour la mise en œuvre de l'invention.

Nous allons maintenant décrire plus en détail différentes procédures mises en œuvre par le système de communication 1. On note que ces procédures tantôt s'appuient des étapes connues de la version 1.0 du protocole LoRaWAN, tantôt proposent des ajustements de ces procédures pour prendre en compte la gestion séparée des clés racines applicative et réseau proposées par l'invention.

Par souci de simplification, on omet dans la suite de la description la participation des passerelles 3 dans les procédures décrites. Il va de soi toutefois que toute communication du terminal 2 avec un serveur de réseau est réalisée par l'intermédiaire de l'une de ces passerelles.

La **figure 3** illustre les premières étapes du procédé de communication selon l'invention telles qu'elles sont mises en œuvre par le système de communication 1 pour permettre au terminal 2 de se connecter au serveur 4 du réseau nominal H-NW. Ces premières étapes forment une procédure de connexion dite réseau mise en œuvre par le terminal 2 en préliminaire de toute communication avec le serveur d'application 5-1. Cette procédure de connexion réseau s'appuie ici sur des messages de type « join-request » et « join-accept » reprenant les formats illustrés aux figures 2b) et 2c). Elle est mise en œuvre par le terminal 2 par l'intermédiaire de son module d'interface réseau MOD-NW.

On suppose en préalable ici que le terminal 2 dispose de diverses informations stockées en mémoire, à savoir :

- d'un identifiant unique DevEUI du terminal 2 (codé sur 8 octets ici), d'un identifiant unique NwkEUI du réseau nominal H-NW (codé sur 8 octets ici), et d'un identifiant unique AppEUI1 du serveur d'application 5-1 avec lequel il souhaite communiquer (codé sur 8 octets ici). Dans l'exemple envisagé ici, ces identifiants sont conformes à l'espace d'adressage IEEE EUI64 ; et
- des clés racines réseau NwkKEY et applicative AppKEY1, partagées respectivement avec le serveur 4 du réseau nominal H-NW et avec le serveur d'application 5-1.

On note que ces informations ont pu être inscrites en dur dans le terminal 2, par exemple par le fabricant du terminal.

On suppose par ailleurs que le serveur 4 du réseau nominal H-NW dispose également de diverses informations stockées en mémoire, à savoir, de l'identifiant unique DevEUI du terminal 2, de l'identifiant unique NwkEUI du réseau nominal H-NW, et de la clé racine réseau NwkKEY partagée avec le terminal 2.

On suppose enfin que le terminal 2 et le serveur 4 du réseau nominal H-NW ont mis en œuvre une procédure de type OTAA (Over The Air Activation), leur permettant de se reconnaître mutuellement (étape E10).

Puis, le terminal 2 génère un nombre aléatoire DevNonceN (codé sur 2 octets ici) et un code d'intégrité MIC pour sa requête de connexion (étape E20). A cet effet, il utilise la fonction CMAC (pour « block cypher based message authentication code ») de l'algorithme de chiffrement AES, désignée par AES_cmac, paramétrée ici par la clé racine réseau NwkKEY (ou par un autre paramètre dérivé de la clé ractine réseau NwkKEY), et appliquée sur la concaténation du champ MHDR du format de message représenté à la figure 2, des identifiants DevEUI et NwkEUI et du nombre aléatoire DevNonceN, afin de générer un code d'authentification de message cmac, soit :

cmac=AES_cmac(NwkKEY,MHDR|DevEUI|NwkEUI|DevNonceN)

Le code d'intégrité MIC est alors obtenu à partir des quatre premiers octets du code cmac, soit :

$$MIC=cmac[0...3]$$

Le terminal 2 envoie ensuite une requête de connexion au serveur 4 du réseau nominal H-NW (étape E30). Cette requête est ici un message « Nwk-Join-Request » s'appuyant sur le format de message illustré à la figure 2(b), et comprenant l'identifiant DevEUI, l'identifiant NwkEUI et le nombre aléatoire DevNonceN. Ce message n'est pas chiffré. La requête de connexion réseau envoyée par le terminal contient également conformément au format illustré à la figure 2(b) le code MIC calculé par le terminal 2 à l'étape E20.

Sur réception de la requête de connexion du terminal 2, le serveur 4 du réseau H-NW vérifie le code MIC à partir des informations transmises par le terminal 2 dans la requête de connexion et de la clé racine réseau NwkKEY qu'il partage avec le terminal 2 (étape E40).

Si le code MIC est valide, il génère à son tour un nombre aléatoire NwkNonce (sur 3 octets ici), et utilise ce nombre pour générer deux clés de session réseau, une pour la voie montante (NwkSKEYup) et une pour la voie descendante (NwkSKEYdown) (étape E50). A cet effet, il utilise ici la procédure de chiffrement notée AES_encrypt de l'algorithme AES, paramétrée par la clé racine réseau NwkKEY (ou par un autre paramètre dérivé de cette clé racine) et appliquée sur un message résultant ici de la concaténation du nombre 0x01 (pour la clé de session réseau NwkSKEYup) ou du nombre 0x02 (pour la clé de session réseau NwkSKEYdown), du nombre aléatoire NwkNonce, d'un identifiant de réseau NetID, du nombre aléatoire DevNonceN et d'un certain nombre d'octets de remplissage à 0 (notés $\text{pad}_{16}$) pour atteindre une dimension de message multiple de 16 (contrainte imposée par l'algorithme AES), soit :

NwkSKEYup= AES_encrypt(NwkKEY,0x01|NwkNonce|NetID|DevNonceN|$\text{pad}_{16}$)
NwkSKEYdown= AES_encrypt(NwkKEY,0x02|NwkNonce|NetID|DevNonceN|$\text{pad}_{16}$) où NetID désigne un identifiant attribué au réseau nominal H-NW (codé sur 3 octets ici) et identifiant de manière unique l'opérateur du réseau nominal H-NW.

Le serveur 4 du réseau H-NW génère par ailleurs un code d'intégrité MIC en utilisant la fonction AES_cmac de l'algorithme AES selon (étape E60) :
cmac=AES_cmac(NwkKEY,MHDR| DevEUI|NwkEUI|DevNonceN|NwkNonce|NetID|DevAddr|DLsettings|RxDelay|CFList)
où :

- DevAddr est un identifiant du terminal 2 dans le réseau nominal H-NW (codé sur 4 octets ici) ;
- DLsettings, RxDelay et CFList désignent des paramètres techniques de la transmission, et plus particulièrement les fréquences utilisées par le réseau nominal, le temps séparant les transmissions du terminal vers le réseau et du réseau vers le terminal, et les débits de transmission à utiliser (ces champs étant codés respectivement sur 1, 1 et 16 octets ici).

On note que les paramètres NetID, DevAddr, DLsettings, RxDelay et CFList sont des paramètres utilisés dans le protocole LoRaWAN et ne sont pas décrits plus en détail ici.

Le serveur 4 retient les 4 premiers octets du code cmac pour générer le code MIC, soit :

$$MIC=cmac[0...3]$$

Puis il répond à la requête de connexion du terminal 2 avec un message d'acceptation de la connexion (message « Nwk-Join-Accept » selon le format illustré à la figure 2c)) comprenant l'identifiant DevEUI, l'identifiant NwkEUI, le nombre aléatoire NwkNonce, l'identifiant NetID, l'identifiant DevAddr, et les paramètres DLsettings, RxDelay et CFList (étape E70). Le message d'acceptation « Nwk-Join-Accept » est chiffré ici avec la clé racine réseau NwkKEY partagée avec le terminal 2. En variante, toute autre clé dérivée de la clé racine réseau peut être utilisée pour chiffrer le message d'acceptation.

Sur réception du message d'acceptation, le terminal 2 le déchiffre au moyen de la clé racine réseau NwkKEY qu'il partage avec le serveur 4 (étape E80), et vérifie le code MIC en utilisant cette même clé réseau et les informations contenues dans le message d'acceptation.

Si le code MIC est valide, le terminal 2, via son module de génération 2C (activé à cet effet par le module d'interface réseau MOD-NW), génère à son tour les clés de session réseau NwkSKEYup et NwkSKEYdown (étape E90), de façon similaire à ce qui a été mis en œuvre par le serveur 4 lors de l'étape E50.

Puis le terminal 2 envoie au serveur 4 un message d'acquittement de génération des clés de session réseau (message « NwkSkey-Ack ») signé et chiffré ici avec la clé racine réseau NwkKEY (ou avec une clé dérivée de la clé racine réseau) (étape E100). Ce message d'acquittement comprend notamment l'identifiant DevEUI, l'identifiant NwkEUI et les deux nombres aléatoires DevNonceN et NwkNonce. On note qu'un tel message d'acquittement n'est pas prévu aujourd'hui par la version standardisée 1.0 du protocole LoRaWAN. Il pourrait être introduit dans ce protocole selon un mécanisme similaire à celui utilisé pour les messages de type « join-request » et « join-accept », en remplacement des données de couche physique PHY-PAYL, comme décrit précédemment en référence à la figure 2.

Ceci clôture la procédure de connexion réseau du terminal 2 au serveur 4 du réseau nominal H-NW, mise en œuvre par le module d'interface réseau MOD-NW du terminal 2. Dès lors, le terminal 2 et le serveur 4 peuvent utiliser les clés de session réseau générées (NwkSKEYup et NwkSKEYdown) qu'ils partagent pour signer (via la génération d'un code d'intégrité MIC) et vérifier l'intégrité des messages (via la vérification du code d'intégrité MIC) qu'ils s'échangent via le réseau nominal H-NW. Ceci est illustré plus en détails dans les autres procédures expliquées ci-après. On note que les clés de session réseau NwkSKEYup et NwkSKEYdown ont vocation à rester secrètes (sauf dans quelques procédures particulières comme décrit ci-après), surtout à l'égard des entités impliqués dans les services applicatifs. Elles sont donc maintenues secrètes à l'égard des serveurs d'application 5 (et en particulier ici du serveur d'application 5-1), et ne sont jamais transmises à ces derniers.

La **figure 4** illustre les étapes du procédé de communication selon l'invention telles qu'elles sont mises en œuvre par le système de communication 1 suite à la procédure de connexion réseau pour permettre au terminal de se connecter au serveur d'application 5-1. Ces étapes forment une procédure de connexion dite applicative du terminal 2 au serveur d'application 5-1, déclenchée après l'accomplissement de la procédure de connexion réseau du terminal 2 au serveur 4 du réseau nominal H-NW décrite en référence à la figure 3.

La procédure de connexion applicative est mise en œuvre par le terminal 2 via son module applicatif MOD-APP. Elle s'appuie également sur des messages de type « join-request » et « join-accept » reprenant les formats illustrés aux figures 2b) et 2c).

On suppose en préalable ici que le serveur d'application 5-1 dispose de diverses informations stockées en mémoire, à savoir, de l'identifiant unique DevEUI du terminal 2, de l'identifiant unique AppEUI1 du serveur d'application 5-1, et de la clé racine applicative AppKEY1 partagée avec le terminal 2.

Le terminal 2 génère un nombre aléatoire DevNonceA (codé sur 2 octets ici) et un code d'intégrité MIC pour signer sa requête de connexion au serveur d'application 5-1 (étape F10). A cet effet, il utilise la fonction AES_cmac de l'algorithme de chiffrement AES paramétrée par la clé de session réseau NwkSKEYup, et appliquée sur la concaténation du champ MHDR du format de message représenté à la figure 2, des identifiants DevEUI, NwkEUI et AppEUI1 et du nombre aléatoire DevNonceA, afin de générer un code d'authentification de message cmac, soit :

cmac=AES_cmac(NwkSKEYup,MHDR| DevEUI|NwkEUI|AppEUI|DevNonceA)

Le code d'intégrité MIC est alors obtenu à partir des quatre premiers octets du code cmac ainsi généré, soit :

$$MIC=cmac[0...3]$$

Le terminal 2 envoie ensuite une requête de connexion au serveur 4 du réseau nominal H-NW pour lui permettre de se connecter au serveur d'application 5-1 (étape F20). Cette requête est ici un message « App-Join-Request » s'appuyant sur le format de message illustré à la figure 2(b), et comprenant l'identifiant DevEUI, l'identifiant NwkEUI, l'identifiant AppEUI1 et le nombre aléatoire DevNonceA. Ce message n'est pas chiffré. La requête de connexion envoyée par le terminal 2 contient également conformément au format illustré à la figure 2(b) le code MIC calculé par le terminal 2 à l'étape F10.

Sur réception de la requête de connexion du terminal 2, le serveur 4 du réseau H-NW vérifie le code MIC à partir des informations transmises par le terminal 2 dans la requête de connexion et de la clé de session réseau NwkSKEYup qu'il partage avec le terminal 2 (étape F30).

Si le code MIC est valide, le serveur 4 relaie la requête de connexion du terminal 2 au serveur d'application 5-1 (étape F40). Il utilise à cet effet un message « Fwd-App-Join-Request » comprenant les mêmes paramètres que la requête de connexion « App-Join-Request » et l'identifiant NetID du réseau nominal H-NW.

Sur réception de la requête de connexion du terminal 2, le serveur d'application 5-1 génère à son tour un nombre aléatoire AppNonce (sur 3 octets ici), et utilise ce nombre pour générer une clé de session applicative AppSKEY1 destinée à être partagée avec le terminal 2 (étape F50). A cet effet, il utilise ici la procédure de chiffrement notée AES_encrypt de l'algorithme AES paramétrée par la clé racine applicative AppKEY1 et appliquée sur un message résultant ici de la concaténation du nombre 0x03, du nombre aléatoire AppNonce, de l'identifiant de réseau NetID, du nombre aléatoire DevNonceA et d'un certain nombre d'octets de remplissage à 0 (notés $pad_{16}$) pour atteindre une dimension de message multiple de 16 (contrainte imposée par l'algorithme AES), soit :

AppSKEY1= AES-encrypt(AppKEY1,0x03|AppNonce|NetID|DevNonceA|$pad_{16}$)

Le serveur d'application 5-1 envoie un message d'acceptation de la connexion du terminal 2 au serveur 4 du réseau nominal H-NW (étape F60). Ce message est ici un message de type « App-Join-Response » reprenant le format illustré à la figure 2c). Il comprend l'identifiant DevEUI, l'identifiant NwkEUI, l'identifiant AppEUI1 et le nombre aléatoire AppNonce.

Sur réception du message d'acceptation du serveur d'application 5-1, le serveur 4 du réseau H-NW génère un code d'intégrité MIC en utilisant la fonction AES_cmac de l'algorithme AES paramétré par la clé de session réseau NwkSKEYdown selon (étape F70) :

cmac=AES_cmac(NwkSKEYdown,MHDR|DevEUI|NwkEUI|AppEUI|DevNonceA|AppNonce)

Le serveur 4 retient les 4 premiers octets du code cmac pour générer le code MIC, soit :

$$MIC=cmac[0...3]$$

Puis il relaie le message d'acceptation du serveur d'application 5-1 au terminal 2 sous la forme d'un message « App-Join-Accept » signé avec le code MIC qu'il vient ainsi de générer (étape F80). Le message « App-Join-Accept » comprend outre le code MIC, l'identifiant DevEUI, l'identifiant NwkEUI, l'identifiant AppEUI1, le nombre aléatoire DevNonceA et le nombre aléatoire AppNonce.

Sur réception du message « Fwd-App-Join-Accept », le terminal 2 vérifie l'intégrité de ce message en vérifiant la validité du code MIC au moyen de la clé de session réseau NwkSKEYdown qu'il partage avec le serveur 4 et des informations contenues dans le message (étape F90).

Si le code MIC est valide, il génère à son tour, par l'intermédiaire de l'activation par le module applicatif MOD-APP de son module de génération 2E, la clé de session applicative AppSKEY1 de façon similaire à ce qui a été mis en œuvre par le serveur d'application 5-1 lors de l'étape F50 (étape F100).

Puis le terminal 2 envoie au serveur 4 un message d'acquittement de génération de la clé de session applicative (message « AppSkey-Ack ») signé et chiffré avec la clé racine applicative AppKEY1 (étape F110). Ce message d'acquittement comprend notamment l'identifiant DevEUI, l'identifiant NwkEUI, l'identifiant AppEUI1 et les deux nombres aléatoires DevNonceA et AppNonce.

Le serveur 4 relaie le message d'acquittement au serveur d'application 5-1 (étape F120).

Ceci clôture la procédure de connexion applicative du terminal 2 au serveur d'application 5-1 mise en œuvre par le module applicatif MOD-APP. Dès lors, le terminal 2 et le serveur d'application 5-1 peuvent utiliser la clé de session applicative AppSKEY1 générée qu'ils partagent pour chiffrer les messages qu'ils s'envoient via le réseau H-NW et le serveur 4 de ce réseau. On note que la clé de session applicative AppSKEY1 a vocation à rester secrète notamment à l'égard du serveur 4 et des autres serveurs d'application 5-2 et 5-3. Elles ne sont jamais transmises à ceux-ci.

On note que les procédures de connexion réseau et applicative précédemment décrites s'appuient sur les algorithmes, paramètres et autres conventions utilisées actuellement dans le protocole LoRaWAN (ex. algorithme AES, fonction CMAC, etc.). Bien entendu, ces hypothèses ne sont pas limitatives en soi et uniquement utilisées ici afin d'illustrer une mise en œuvre possible de l'invention. D'autres algorithmes, paramètres et conventions pourraient être envisagées (ex. fonction HMAC plutôt que CMAC, etc.).

Dans le mode de réalisation qui vient d'être décrit en référence à la figure 4, le terminal 2 se connecte à un serveur d'application unique, à savoir le serveur d'application 5-1.

Comme mentionné précédemment, l'invention offre avantageusement la possibilité au terminal 2 de se connecter simultanément à d'autres serveurs d'application 5, notamment dans l'exemple envisagé ici aux serveurs d'application 5-2 et 5-3. A cet effet, le terminal 2 partage avec ces serveurs d'application, une clé racine applicative distincte, c'est-à-dire une clé racine applicative AppKEY2 avec le serveur d'application 5-2 et une clé racine applicative AppKEY3 avec le serveur d'application 5-3 ; ces clés racine applicatives sont stockées dans le module de stockage 2B du terminal 2, chaque clé racine applicative étant stockée préférentiellement dans un domaine de sécurité distinct du module de stockage 2B comme mentionné précédemment. Chaque clé racine applicative partagée par le terminal avec un serveur d'application est maintenue secrète à l'égard des autres serveurs d'application, et bien entendu du serveur de réseau 4.

Dans une variante de réalisation, une même clé racine applicative peut être partagée avec plusieurs serveurs d'application, notamment lorsque ceux-ci sont gérés par un même fournisseur de services.

Pour se connecter au serveur d'application 5-2, le terminal 2 peut mettre en œuvre avec celui-ci une procédure de connexion applicative similaire à celle mise en œuvre avec le serveur d'application 5-1, et ainsi de suite pour les autres serveurs d'applications, ces procédures de connexion applicatives pouvant être menées en parallèle ou successivement. Une telle implémentation s'appuie donc sur l'envoi de requêtes de connexion multiples par le terminal 2, via son module applicatif MOD-APP (et notamment un module d'émission 2G de ce module applicatif configuré à cet effet), aux différents serveurs d'application 5, via le serveur de réseau 4. Chaque requête de connexion envoyée par le terminal à un serveur d'application contient un identifiant de ce serveur d'application de sorte à permettre au serveur de réseau 4 d'aiguiller la requête de connexion vers le serveur d'application concerné.

Dans un autre mode de réalisation de l'invention, les procédures de connexion du terminal 2 aux serveurs d'application 5-1, 5-2 et 5-3 peuvent mutualiser certains messages émis par le terminal 2, et plus particulièrement par son module applicatif MOD-APP. Ceci permet avantageusement de limiter la consommation du terminal 2 et d'économiser le lien radio entre le terminal 2 et le réseau nominal H-NW.

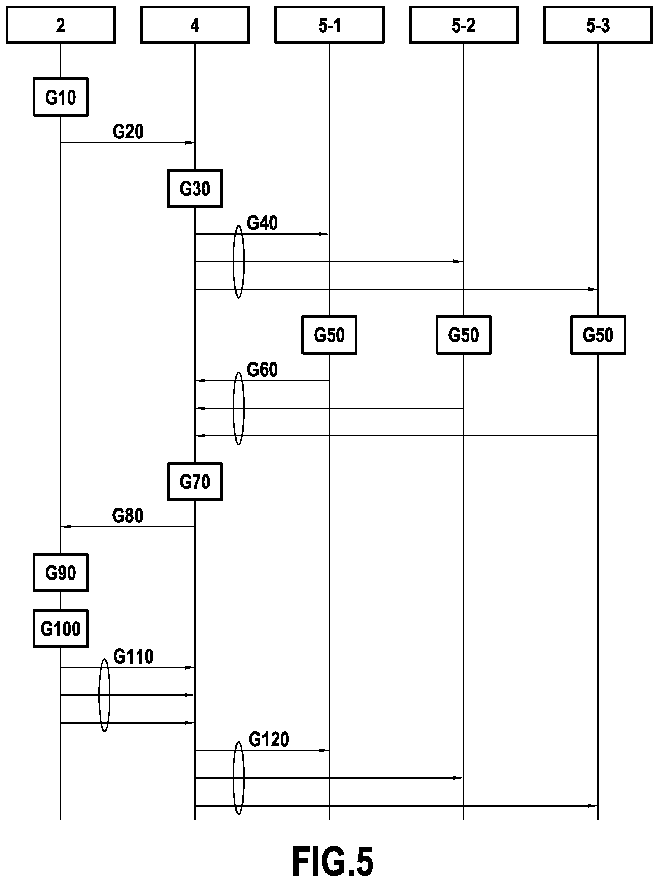

Ainsi, la **figure 5** illustre les différentes étapes du procédé de communication selon l'invention tel qu'il est mis en œuvre dans ce mode de réalisation par le système de communication 1 pour permettre au terminal 2 de se connecter à plusieurs serveurs d'application 5-1, 5-2 et 5-3.

Comme pour le mode de réalisation envisagé à la figure 4, cette procédure de connexion « mutualisée » auprès des serveurs d'application 5-1, 5-2 et 5-3 est mise en œuvre par le module applicatif MOD-APP du terminal 2 suite à la procédure de connexion réseau au serveur 4 du réseau nominal H-NW décrite en référence à la figure 3. Elle s'appuie sur des messages de type « mAPP-join-request » et « mAPP-join-accept » (non prévus par la version 1.0 de la norme LoRaWAN) reprenant les formats illustrés aux figures 2b) et 2c), qui permettent de définir une requête de connexion unique destinée à être envoyée par le terminal 2 au serveur de réseau 4 pour se connecter aux trois serveurs d'application 5-1, 5-2 et 5-3.

On suppose en préalable ici que le terminal 2 dispose également des identifiants AppEUI2 et AppEUI3 des serveurs d'application 5-2 et 5-3 respectivement. En outre, chaque serveur d'application 5 dispose de diverses informations stockées en mémoire, à savoir, de l'identifiant unique DevEUI du terminal 2, de son propre identifiant unique (AppEUI1 pour le serveur d'application 5-1, AppEUI2 pour le serveur d'application 5-2, et AppEUI3 pour le serveur d'application 5-3) et de la clé racine applicative qu'il partage avec le terminal 2 (i.e. AppKEY1 pour le serveur d'application 5-1, AppKEY2 pour le serveur d'application 5-2, et AppKEY3 pour le serveur d'application 5-3).

Le terminal 2 génère un nombre aléatoire DevNonceA (codé sur 2 octets ici) et un code d'intégrité MIC pour signer sa requête de connexion aux serveurs d'application 5-1, 5-2 et 5-3 (étape G10). A cet effet, il utilise ici la fonction AES_cmac de l'algorithme de chiffrement AES paramétré par la clé de session réseau NwkSKEYup, et appliquée sur la concaténation du champ MHDR du format de message représenté à la figure 2, des identifiants DevEUI, NwkEUI, AppEUI1, AppEUI2 et AppEUI3, et du nombre aléatoire DevNonceA, afin de générer un code d'authentification de message cmac, soit :

cmac=AES_cmac(NwkSKEYup,MHDR|DevEUI|NwkEUI|NoAR|AppEUI1|AppEUI2|AppEUI3| DevNonceA)

où NoAR désigne le nombre de serveurs d'application concernés par la requête unique (autrement dit, le nombre de requêtes de connexion applicatives qui sont mutualisées via l'envoi d'une requête de connexion unique). Le code d'intégrité MIC est alors obtenu à partir des quatre premiers octets du code cmac ainsi généré, soit :

$$MIC=cmac[0...3]$$

Le terminal 2 envoie ensuite (via son module applicatif MOD-APP et notamment via son module d'émission 2G configuré à cet effet) une requête de connexion unique (i.e. conjointe) au serveur 4 du réseau nominal H-NW pour lui permettre de se connecter aux serveurs d'application 5-1, 5-2 et 5-3 (étape G20). Cette requête unique est ici un message « mApp-Join-Request » s'appuyant sur le format de message illustré à la figure 2(b), et comprenant l'identifiant DevEUI, l'identifiant NwkEUI, les identifiants AppEUI1, AppEUI2 et AppEUI3, le nombre aléatoire DevNonceA, et le nombre NoAR. Ce message n'est pas chiffré. La requête de connexion unique envoyée par le terminal 2 contient également conformément au format illustré à la figure 2(b) le code MIC calculé par le terminal 2 à l'étape F10.

On note que cette procédure de connexion applicative conjointe n'est actuellement pas prévue par le protocole LoRaWAN dans sa version actuelle et requiert la définition appropriée dans ce protocole d'un message mApp-Join-Request comprenant notamment les identifiants de chaque serveur d'application visé par le terminal 2 et du paramètre NoAR (par exemple sur un octet).

Sur réception de la requête de connexion unique du terminal 2, le serveur 4 du réseau H-NW vérifie le code MIC à partir des informations transmises par le terminal 2 dans la requête de connexion conjointe et de la clé de session réseau NwkSKEYup qu'il partage avec le terminal 2 (étape G30).

Si le code MIC est valide, le serveur 4 transmet une requête de connexion distincte du terminal 2 à chacun des serveurs d'application 5-1, 5-2 et 5-3 (étape G40). Il utilise à cet effet un message « Fwd-App-Join-Request » comprenant, pour chaque serveur d'application 5-i, i=1,...,3, l'identifiant DevEUI, l'identifiant NwkEUI, l'identifiant AppEUIi correspondant au serveur d'application 5-i, le nombre aléatoire DevNonceA et l'identifiant NetID du réseau nominal H-NW.

Sur réception de la requête de connexion du terminal 2, chaque serveur d'application 5-i, i=1,...,3 génère à son tour un nombre aléatoire AppNoncei (sur 3 octets ici), et utilise ce nombre pour générer une clé de session applicative AppSKEYi destinée à être partagée avec le terminal 2 (étapes G50). A cet effet, il utilise la procédure de chiffrement notée AES_encrypt de l'algorithme AES paramétrée par la clé racine applicative AppKEYi et appliquée sur un message résultant ici de la concaténation du nombre 0x03, du nombre aléatoire AppNoncei, de l'identifiant de réseau NetID, du nombre aléatoire DevNonceA et d'un certain nombre d'octets de remplissage à 0 (notés $pad_{16}$) pour atteindre une dimension de message multiple de 16 (contrainte imposée par l'algorithme AES), soit :
AppSKEYi= AES-encrypt(AppKEYi,0x03|AppNoncei|NetID|DevNonceA|$pad_{16}$)

Chaque serveur d'application 5-i envoie ensuite au serveur 4 du réseau nominal H-NW un message d'acceptation de la connexion du terminal 2 (étapes G60). Ce message est ici un message de type « App-Join-Accept » reprenant le format illustré à la figure 2c). Il comprend l'identifiant DevEUI, l'identifiant NwkEUI, l'identifiant AppEUIi et le nombre aléatoire AppNoncei.

Sur réception des messages d'acceptation des serveurs d'application 5-1, 5-2 et 5-3, le serveur 4 du réseau H-NW génère un code d'intégrité MIC en utilisant la fonction AES_cmac de l'algorithme AES paramétré par la clé de session réseau NwkSKEYdown selon (étape G70) :
cmac=AES_cmac(NwkSKEYdown,MHDR|DevEUI|NwkEUI|NoAR|AppEUI1|AppEUI2|APPEUI3| DevNonceA|AppNonce1|AppNonce2|AppNonce3)

On note qu'en cas de non réponse de l'un des serveurs d'application, le champ correspondant au nombre aléatoire AppNonce associé à ce serveur d'application est remplacé dans le calcul du code cmac par des octets de remplissage.

Le serveur 4 retient les 4 premiers octets du code cmac pour générer le code MIC, soit :

$$MIC=cmac[0...3]$$

Puis il envoie alors un message d'acceptation unique (i.e. conjoint) au terminal 2 sous la forme d'un message « mApp-Join-Accept » signé avec le code MIC qu'il vient ainsi de générer (étape G80). Le message « mApp-Join-Accept » comprend outre le code MIC, l'identifiant DevEUI, l'identifiant NwkEUI, les identifiants AppEUI1, AppEUI2 et AppEUI3, le nombre aléatoire DevNonceA, les nombres aléatoires AppNonce1, AppNonce2 et AppNonce3 et le nombre NoAR.

Sur réception du message « mApp-Join-Accept », le terminal 2 vérifie l'intégrité de ce message en vérifiant la validité du code MIC inclus dans le message au moyen de la clé de session réseau NwkSKEYdown qu'il partage avec le serveur 4 et des informations contenues dans le message (étape G90).

Si le code MIC est valide, il génère à son tour les clés de session applicatives AppSKEY1, AppSKEY2 et AppSKEY3 via son module 2F de façon similaire à ce qui a été mis en œuvre respectivement par le serveur d'application 5-1, par le serveur d'application 5-2 et par le serveur d'application 5-3 lors des étapes G50 (étape G100).

Puis le terminal 2 envoie au serveur 4 pour chaque serveur d'application 5-i, i=1,...,3 un message d'acquittement distinct de génération de la clé de session applicative AppSKEYi partagée avec ce serveur d'application 5-i (ex. message « mAppSkey-Ack » dédié à cet effet, ou message « AppSkey-Ack » existant de la norme LoRaWAN 1.0), signé et chiffré avec la clé racine applicative AppKEYi qu'il partage avec le serveur d'application 5-i (étapes G110). Ce message d'acquittement comprend notamment l'identifiant DevEUI, l'identifiant NwkEUI, l'identifiant AppEUIi du serveur d'application 5-i concerné et les deux nombres aléatoires DevNonceA et AppNoncei.

Le serveur 4 relaie ces messages d'acquittement aux serveurs d'application 5-1, 5-2 et 5-3 respectivement (étapes G120).

Ceci clôture la procédure de connexion mutualisée du terminal 2 aux serveurs d'application 5-1, 5-2 et 5-3. Dès lors, le terminal 2 et chaque serveur d'application 5-i, i=1,..,3 peuvent utiliser la clé de session applicative AppSKEYi générée qu'ils partagent pour chiffrer les messages qu'ils s'envoient via le réseau H-NW et le serveur 4 de ce réseau. On note que chaque clé de session applicative AppSKEYi, i=1,...,3 a vocation à être maintenue secrète notamment à l'égard du serveur 4 et des autres serveurs d'application 5-j, j différent de i. Elles ne sont jamais transmises à ceux-ci.

Pour permettre au serveur 4 du réseau d'aiguiller les échanges du terminal 2 avec l'un des serveurs d'application, le terminal 2 peut utiliser le champ FPORT des messages pour indiquer le serveur d'application concerné (via son identifiant par exemple) (cf. figure 2). En variante, un champ supplémentaire peut être créé à cet effet.

On note que bien que ce mode de réalisation ait été décrit pour trois serveurs d'application, il peut également être appliqué à un nombre de serveurs distincts de trois. Un nombre maximal de trois serveurs permet avantageusement d'utiliser des messages dont le format est conforme au format de message défini dans la version 1.0 du protocole LoRaWAN (notamment quant à la taille des champs de ce message). Toutefois, pour permettre une mutualisation des ressources pour se connecter à plus de trois serveurs d'application, un nouveau format de message pourrait être envisagé, ou certaines tailles de champs ou d'identifiants revus. L'invention peut par ailleurs s'appliquer dans un autre contexte que des réseaux étendus de type LoRaWAN dans lesquels des formats de messages différents sont envisagés (par exemple dans des réseaux ayant une architecture connue de type Sigfox, Weightless, NWave, WM-bus, etc.).

La **figure 6** illustre un nouvel exemple d'application de l'invention : elle représente plus particulièrement les différentes étapes du procédé de communication selon l'invention tel qu'il est mis en œuvre par le système de communication 1 lors d'une procédure de rafraichissement de la session du terminal 2 avec le serveur 4 du réseau H-NW. Cette procédure de rafraichissement, mise en œuvre par le module d'interface réseau MOD-NW du terminal 2, fait suite à la procédure de connexion réseau au serveur 4 du réseau nominal H-NW et décrite en référence à la figure 3 ; elle vise à générer de nouvelles clés de session réseau destinées à être utilisées entre le terminal 2 et le serveur 4 du réseau N-HW.

Elle peut ainsi par exemple faire suite à une procédure de génération d'une première clé de session réseau entre le terminal 2 et le serveur 4. Cette procédure de rafraîchissement s'appuie sur des messages de type « rejoin-request » et « rejoin-accept » reprenant les formats illustrés aux figures 2b) et 2c).

Conformément à cette procédure de rafraîchissement, le terminal 2 génère un compteur entier RJcount (codé sur 2 octets ici) (étape H10). Ce compteur RJCount est destiné à être incrémenté à chaque procédure de rafraichissement de la session initiée par le terminal 2.

Il génère également un code d'intégrité MIC pour sa requête de rafraîchissement. Il utilise à cet effet la fonction AES_cmac de l'algorithme de chiffrement AES paramétré par la clé maîtresse réseau NwkKEY, et appliquée sur la concaténation du champ MHDR du format de message représenté à la figure 2, des identifiants DevEUI, NwkEUI et NetID, et du compteur RJCount, afin de générer un code d'authentification de message cmac, soit :

cmac=AES_cmac(NwkKEY,MHDR|DevEUI|NwkEUI|NetID|RJCount)

Le code d'intégrité MIC est alors obtenu à partir des quatre premiers octets du code cmac, soit :

$$MIC=cmac[0...3]$$

Le terminal 2 envoie alors une requête de rafraichissement au serveur 4 du réseau nominal H-NW (étape H20). Cette requête est ici un message « Nwk-Rejoin-Request » s'appuyant sur le format de message illustré à la figure 2(b), et comprenant l'identifiant DevEUI, l'identifiant NwkEUI, l'identifiant NetID et le compteur RJCount. Ce message n'est pas chiffré. La requête de rafraîchissement envoyée par le terminal 2 contient également conformément au format illustré à la figure 2(b) le code MIC calculé par le terminal 2 à l'étape H10.

Sur réception de la requête de rafraichissement du terminal 2, le serveur 4 du réseau H-NW vérifie le code MIC à partir des informations transmises par le terminal 2 dans la requête de rafraîchissement et de la clé racine réseau NwkKEY qu'il partage avec le terminal 2 (étape H30).

Si le code MIC est valide, il génère un nombre aléatoire NwkNonce (sur 3 octets ici), et utilise ce nombre pour générer deux nouvelles clés de session réseau, une pour la voie montante (NwkSKEYup') et une pour la voie descendante (NwkSKEYdown') comme décrit précédemment pour l'étape E50 illustrée à la figure 3 (le compteur RJCount remplace lors de cette génération le nombre aléatoire DevNonceN) (étape H40).

Le serveur 4 du réseau H-NW génère par ailleurs un code d'intégrité MIC en utilisant la fonction AES_cmac de l'algorithme AES selon (étape H50) :

cmac=AES_cmac(NwkKEY,MHDR|      DevEUI|NwkEUI|RJCount|NwkNonce|NetID|DevAddr|DLsettingsl RxDelay|CFList)

Le serveur 4 retient les 4 premiers octets du code cmac ainsi généré pour obtenir le code MIC, soit :

$$MIC=cmac[0...3]$$

Puis il répond à la requête de rafraichissement du terminal 2 avec un message d'acceptation du rafraichissement (message « Nwk-Rejoin-Accept » selon le format illustré à la figure 2c)) comprenant l'identifiant DevEUI, l'identifiant NwkEUI, le nombre aléatoire NwkNonce, l'identifiant NetID, l'identifiant DevAddr, et les paramètres DLsettings, RxDelay et CFList (étape H60). Le message d'acceptation « Nwk-Rejoin-Accept » est chiffré avec la clé racine réseau NwkKEY partagée avec le terminal 2.

Sur réception du message d'acceptation, le terminal 2 le déchiffre au moyen de la clé maîtresse réseau NwkKEY qu'il partage avec le serveur 4, et vérifie le code MIC en utilisant cette même clé réseau et les informations contenues dans le message d'acceptation (étape H70).

Si le code est valide, il génère à son tour les deux nouvelles clés de session réseau NwkSKEYup' et NwkSKEYdown', de façon similaire à ce qui a été mis en œuvre par le serveur 4 lors de l'étape H40 (étape H80).

Puis le terminal 2 envoie au serveur 4 un message d'acquittement de génération des clés de session (message « NwkSkey-Ack ») signé et chiffré avec la clé racine réseau NwkKEY (étape H90) comme décrit précédemment à l'étape E100 illustré sur la figure 3. Ce message comprend l'identifiant DevEUI, l'identifiant NwkEUI, l'identifiant NetID et le compteur RJCount.

Ceci clôture la procédure de rafraichissement de la session réseau du terminal 2. Dès lors, le terminal 2 et le serveur 4 peuvent utiliser les nouvelles clés de session réseau générées (NwkSKEYup' et NwkSKEYdown') qu'ils partagent pour signer (via la génération d'un code d'intégrité MIC) et vérifier l'intégrité des messages (via la vérification du code d'intégrité MIC) qu'ils s'échangent via le réseau nominal H-NW.

On note que l'invention a été décrite en référence au protocole LoRaWAN qui présente un avantage particulier dans le contexte de l'Internet des Objets. Toutefois, l'invention s'applique également à d'autres types d'architecture et de protocoles (par exemple propriétaires) que le protocole LoRaWAN, et qui reposent tout comme ce protocole, sur un serveur de réseau pour permettre la communication entre un terminal et un serveur d'application.

En outre d'autres algorithmes de chiffrement, de signature, s'appuyant sur d'autres paramètres échangés entre les entités du système de communication peuvent être envisagés, et l'exemple fourni ici n'est donné qu'à titre illustratif dans le cadre du protocole LoRaWAN.

## Revendications

**1.** Système de communications (1) comprenant :

    - un terminal (2) ;
    - un serveur (4) d'un réseau de télécommunications, apte à fournir au moins un service réseau audit terminal ; et
    - au moins un serveur d'application (5 ;5-1,5-2,5-3), apte à fournir des services applicatifs au terminal via le réseau de télécommunications et le serveur du réseau de télécommunications ;

    **caractérisé en ce que** :

    - le terminal (2) et le serveur (4) du réseau partagent et stockent une même clé racine dite réseau (NwkKEY) maintenue secrète à l'égard du serveur d'application (5-1), et sont configurés pour générer à partir de cette clé racine réseau au moins une clé de session réseau destinée à être utilisée pour signer et vérifier l'intégrité de messages échangés sur le réseau entre le terminal et le serveur du réseau ; et
    - le terminal (2) et le serveur d'application (5-1) partagent et stockent une même clé racine dite applicative (AppKEY1) maintenue secrète à l'égard du serveur du réseau, et sont configurés pour générer à partir de cette clé racine applicative au moins une clé de session applicative destinée à être utilisée pour chiffrer et déchiffrer des messages échangés entre le terminal et ce serveur d'application via le réseau.

**2.** Système (1) selon la revendication 1 dans lequel :

    - le terminal (2) et le serveur du réseau (4) sont configurés pour générer une dite clé de session réseau lors d'une procédure de connexion dite réseau du terminal au réseau ;
    - le terminal (2) et ledit serveur d'application (5-1) sont configurés pour générer une dite clé de session applicative lors d'une procédure de connexion dite applicative du terminal à ce serveur d'application, ladite procédure de connexion applicative étant déclenchée par le terminal après l'accomplissement de la procédure de connexion réseau.

**3.** Système selon la revendication 1 ou 2 dans lequel le terminal et le serveur du réseau sont configurés pour générer au moins une dite clé de session réseau à partir de la clé racine réseau lors d'une procédure de rafraîchissement de session du terminal.

**4.** Système selon l'une quelconque des revendications 1 à 3 comprenant une pluralité de serveurs d'applications (5-1,5-2,5-3) et dans lequel le terminal partage des clés racines applicatives distinctes (AppKEY1,AppKEY2,AppKEY3) avec ladite pluralité de serveurs d'application, chaque clé racine applicative partagée avec un dit serveur d'application étant maintenue secrète à l'égard des autres serveurs d'application de ladite pluralité de serveurs d'application.

**5.** Système selon la revendication 4 dans lequel le terminal est apte à établir et maintenir des connexions simultanées avec ladite pluralité de serveurs d'application.

**6.** Système selon la revendication 4 ou 5 dans lequel :

- le terminal est configuré pour envoyer une requête unique (G20) au serveur du réseau pour se connecter à ladite pluralité de serveurs d'application, cette requête unique comprenant un identifiant de chaque serveur d'application de ladite pluralité de serveurs d'application ; et
- le serveur du réseau est configuré pour envoyer (G40), suite à la réception de la requête unique, une pluralité de requêtes à ladite pluralité de serveurs d'application, la requête envoyée à un dit serveur d'application étant une requête de connexion du terminal à ce serveur d'application.

**7.** Système selon l'une quelconque des revendications 1 à 6 dans lequel le serveur de réseau, le terminal et ledit au moins un serveur d'application sont configurés pour mettre en œuvre le protocole LoRaWAN.

**8.** Terminal (2) d'un système (1) de communications comprenant ledit terminal, un serveur (4) d'un réseau de télécommunications apte à fournir au moins un service réseau au terminal, et au moins un serveur d'application (5) apte à fournir des services applicatifs au terminal via le réseau de télécommunications et le serveur du réseau de télécommunications, le terminal comprenant :

- un premier module de stockage (2A) d'une clé racine dite réseau partagée avec le serveur du réseau et maintenue secrète à l'égard dudit serveur d'application ;
- un premier module de génération (2C), configuré pour générer à partir de cette clé racine réseau, au moins une clé de session dite réseau ;
- un module de signature et de vérification (2D), configuré pour signer et/ou vérifier des messages échangés entre le terminal et le serveur du réseau au moyen de la clé de session réseau générée par le premier module de génération ;

- un deuxième module de stockage (2B) d'au moins une clé racine dite applicative partagée avec le serveur d'application, et maintenue secrète à l'égard du serveur du réseau ;
- un deuxième module de génération (2E) configuré pour obtenir au moins une clé de session dite applicative à partir de la clé racine applicative partagée avec le serveur d'application ; et
- un module de chiffrement et de déchiffrement (2F), configuré pour chiffrer et/ou déchiffrer des messages échangés entre le terminal et le serveur d'application via le réseau au moyen de la clé de session applicative générée par le deuxième module de génération.

**9.** Terminal selon la revendication 8 dans lequel :

- le premier module de stockage (2A) est compris dans un module d'interface réseau (MOD-NW) du terminal ; et
- le deuxième module de stockage (2B) est compris dans un module applicatif (MOD-APP) du terminal.

**10.** Terminal selon la revendication 9 dans lequel le premier module de génération est activé par le module d'interface réseau lors d'une procédure de connexion dite réseau du terminal au serveur du réseau, et le deuxième module de génération d'une clé de session applicative est activé par le module applicatif du terminal lors d'une procédure de connexion dite applicative du terminal au serveur d'application, cette procédure de connexion applicative étant mise en œuvre par le module applicatif après l'accomplissement de la procédure de connexion réseau.

**11.** Terminal selon l'une quelconque des revendications 8 à 10 dans lequel le système comprend une pluralité de serveurs d'application (5-1,5-2,5-3) et le deuxième module de stockage comprend une pluralité de clés racines applicatives distinctes partagées avec ladite pluralité de serveurs d'application, chaque clé racine applicative partagée avec un dit serveur d'application étant maintenue secrète à l'égard des autres serveurs d'application de ladite pluralité de serveurs d'application.

**12.** Terminal selon la revendication 11 comprenant un module d'émission (2G) configuré pour envoyer une requête unique au serveur du réseau pour se connecter à ladite pluralité de serveurs d'application, cette requête unique comprenant un identifiant de chaque serveur d'application de ladite pluralité de serveurs d'application.

**13.** Terminal selon la revendication 11 comprenant un module d'émission (2G) configuré pour envoyer une pluralité de requêtes au serveur du réseau pour se connecter à ladite pluralité de serveurs d'application, chaque requête comprenant un identifiant d'un serveur d'application distinct de ladite pluralité de serveurs d'application.

14. Procédé de communication, au sein d'un système de communications comprenant un terminal, un serveur d'un réseau de télécommunications apte à fournir au moins un service réseau au terminal, et au moins un serveur d'application apte à fournir des services applicatifs au terminal via le réseau de télécommunications et le serveur du réseau de télécommunications, ce procédé de communication comprenant :

　　- une première étape de connexion (E10-E100) du terminal au serveur du réseau comprenant une génération par le terminal et par le serveur du réseau d'une clé de session dite réseau à partir de la clé racine réseau partagée entre le terminal et le serveur du réseau et maintenue secrète à l'égard du serveur d'application, cette clé de session réseau étant destinée à être utilisée pour signer et vérifier l'intégrité de messages échangés sur le réseau entre le terminal et le serveur du réseau ;
　　- une deuxième étape de connexion (F10-F120) du terminal au serveur d'application, cette deuxième étape de connexion comprenant une génération par le terminal et par le serveur d'application d'une clé de session dite applicative à partir de la clé racine applicative partagée entre le terminal et le serveur d'application et maintenue secrète à l'égard du serveur du réseau, cette clé de session applicative étant destinée à être utilisée pour chiffrer et déchiffrer des messages échangés entre le terminal et ce serveur d'application via le réseau ;

ladite au moins une deuxième étape de connexion étant mise en œuvre après l'accomplissement de la première étape de connexion.

**Patentansprüche**

1. Kommunikationssystem (1) umfassend:

　　- ein Endgerät (2);
　　- einen Server (4) eines Telekommunikationsnetzes, der geeignet ist, dem Endgerät mindestens ein Netzdienst bereitzustellen; und
　　- mindestens einen Anwendungsserver (5; 5-1, 5-2, 5-3), der geeignet ist, dem Endgerät über das Telekommunikationsnetz und den Server des Telekommunikationsnetzes Anwendungsdienste bereitzustellen;

**dadurch gekennzeichnet, dass**:

　　- das Endgerät (2) und der Server (4) des Netzes einen selben Netzwurzelschlüssel (NwkKEY) gemeinsam nutzen und speichern, der gegenüber dem Anwendungsserver (5-1) geheim gehalten wird, und dazu ausgebildet sind, anhand dieses Netzwurzelschlüssels mindestens einen Netzsitzungsschlüssel zu erzeugen, der dazu bestimmt ist, zum Signieren und Überprüfen der Integrität von Nachrichten genutzt zu werden, die im Netz zwischen dem Endgerät und dem Server des Netzes ausgetauscht werden; und
　　- das Endgerät (2) und der Anwendungsserver (5-1) einen selben Anwendungswurzelschlüssel (AppKEY1) gemeinsam nutzen und speichern, der gegenüber dem Server des Netzes geheim gehalten wird, und dazu ausgebildet sind, anhand dieses Anwendungswurzelschlüssels mindestens einen Anwendungssitzungsschlüssel zu erzeugen, der dazu bestimmt ist, zum Ver- und Entschlüsseln der Nachrichten genutzt zu werden, die über das Netz zwischen dem Endgerät und diesem Anwendungsserver ausgetauscht werden.

2. System (1) nach Anspruch 1, wobei:

　　- das Endgerät (2) und der Server des Netzes (4) dazu ausgebildet sind, einen der Netzsitzungsschlüssel bei einer Netzverbindungsprozedur des Endgeräts mit dem Netz zu erzeugen;
　　- das Endgerät (2) und der Anwendungsserver (5-1) dazu ausgebildet sind, einen der Anwendungssitzungsschlüssel bei einer Anwendungsverbindungsprozedur des Endgeräts mit diesem Anwendungsserver zu erzeugen, wobei die Anwendungsverbindungsprozedur durch das Endgerät nach dem Abschluss der Netzverbindungsprozedur ausgelöst wird.

3. System nach Anspruch 1 oder 2, wobei das Endgerät und der Server des Netzes dazu ausgebildet sind, mindestens einen der Netzsitzungsschlüssel anhand des Netzwurzelschlüssels bei einer Sitzungserneuerungsprozedur des Endgeräts zu erzeugen.

4. System nach einem der Ansprüche 1 bis 3, umfassend eine Mehrzahl von Anwendungsservern (5-1, 5-2, 5-3), und wobei das Endgerät verschiedene Anwendungswurzelschlüssel (AppKEY1, AppKEY2, AppKEY3) mit der Mehrzahl von Anwendungsservern gemeinsam nutzt, wobei jeder Anwendungswurzelschlüssel, der mit einem der Anwendungsserver gemeinsam genutzt wird, gegenüber den anderen Anwendungsservern der Mehrzahl von Anwendungsservern geheim gehalten wird.

5. System nach Anspruch 4, wobei das Endgerät geeignet ist, gleichzeitige Verbindungen mit der Mehrzahl von Anwendungsservern aufzubauen und beizubehalten.

6. System nach Anspruch 4 oder 5, wobei:

   - das Endgerät dazu ausgebildet ist, eine eindeutige Anforderung (G20) an den Server des Netzes zu senden, um sich mit der Mehrzahl von Anwendungsservern zu verbinden, wobei diese eindeutige Anforderung eine Kennung jedes Anwendungsservers der Mehrzahl von Anwendungsservern umfasst; und
   - der Server des Netzes dazu ausgebildet ist, nach dem Empfang der eindeutigen Anforderung eine Mehrzahl von Anforderungen an die Mehrzahl von Anwendungsservern zu senden (G40), wobei die Anforderung, die an einen der Anwendungsserver gesendet wird, eine Anforderung zur Verbindung des Endgeräts mit diesem Anwendungsserver ist.

7. System nach einem der Ansprüche 1 bis 6, wobei der Server des Netzes, das Endgerät und der mindestens eine Anwendungsserver dazu ausgebildet sind, das LoRaWAN-Protokoll zu implementieren.

8. Endgerät (2) eines Kommunikationssystems (1) umfassend das Endgerät, einen Server (4) eines Telekommunikationsnetzes, der geeignet ist, dem Endgerät mindestens einen Netzdienst bereitzustellen, und mindestens einen Anwendungsserver (5), der geeignet ist, dem Endgerät über das Telekommunikationsnetz und den Server des Telekommunikationsnetzes Anwendungsdienste bereitzustellen, das Endgerät umfassend:

   - ein erstes Modul zur Speicherung (2A) eines Netzwurzelschlüssels, der mit dem Server des Netzes gemeinsam genutzt wird und gegenüber dem Anwendungsserver geheim gehalten wird;
   - ein erstes Erzeugungsmodul (2C), das dazu ausgebildet ist, anhand dieses Netzwurzelschlüssels mindestens einen Netzsitzungsschlüssel zu erzeugen;
   - ein Signierungs- und Überprüfungsmodul (2D), das dazu ausgebildet ist, Nachrichten, die zwischen dem Endgerät und dem Server des Netzes ausgetauscht werden, mittels des Netzsitzungsschlüssels, der vom ersten Erzeugungsmodul erzeugt wird, zu signieren und/oder zu überprüfen;
   - ein zweites Modul zur Speicherung (2B) mindestens eines Anwendungswurzelschlüssels, der mit dem Anwendungsserver gemeinsam genutzt wird und gegenüber dem Server des Netzes geheim gehalten wird;
   - ein zweites Erzeugungsmodul (2E), das dazu ausgebildet ist, mindestens einen Anwendungssitzungsschlüssel anhand des Anwendungswurzelschlüssels zu erhalten, der mit dem Anwendungsserver gemeinsam genutzt wird; und
   - ein Ver- und Entschlüsselungsmodul (2F), das dazu ausgebildet ist, Nachrichten, die über das Netz zwischen dem Endgerät und dem Anwendungsserver ausgetauscht werden, mittels des Anwendungssitzungsschlüssels, der vom zweiten Erzeugungsmodul erzeugt wird, zu ver- und/oder zu entschlüsseln.

9. Endgerät nach Anspruch 8, wobei:

   - das erste Speicherungsmodul (2A) in einem Netzschnittstellenmodul (MOD-NW) des Endgeräts enthalten ist; und
   - das zweite Speicherungsmodul (2B) in einem Anwendungsmodul (MOD-APP) des Endgeräts enthalten ist.

10. Endgerät nach Anspruch 9, wobei das erste Erzeugungsmodul bei einer Netzverbindungsprozedur des Endgeräts mit dem Server des Netzes vom Netzschnittstellenmodul aktiviert wird und das zweite Modul zur Erzeugung eines Anwendungssitzungsschlüssels bei einer Anwendungsverbindungsprozedur des Endgeräts mit dem Anwendungsserver vom Anwendungsmodul des Endgeräts aktiviert wird, wobei diese Anwendungsverbindungsprozedur nach dem Abschluss der Netzverbindungsprozedur vom Anwendungsmodul durchgeführt wird.

11. Endgerät nach einem der Ansprüche 8 bis 10, wobei das System eine Mehrzahl von Anwendungsservern (5-1, 5-2, 5-3) umfasst und das zweite Speicherungsmodul eine Mehrzahl von verschiedenen Anwendungswurzelschlüsseln umfasst, die mit der Mehrzahl von Anwendungsservern gemeinsam nutzt werden, wobei jeder Anwendungswurzelschlüssel, der mit einem der Anwendungsserver gemeinsam genutzt wird, gegenüber den anderen Anwendungsservern der Mehrzahl von Anwendungsservern geheim gehalten wird.

12. Endgerät nach Anspruch 11, umfassend ein Sendemodul (2G), das dazu ausgebildet ist, eine eindeutige Anforderung an den Server des Netzes zu senden, um sich mit der Mehrzahl von Anwendungsservern zu verbinden, wobei diese eindeutige Anforderung eine Kennung jedes Anwendungsservers der Mehrzahl von Anwendungsservern umfasst.

13. Endgerät nach Anspruch 11, umfassend ein Sendemodul (2G), das dazu ausgebildet ist, eine Mehrzahl von Anforderungen an den Server des Netzes zu senden, um sich mit der Mehrzahl von Anwendungsservern zu verbinden, wobei jede Anforderung eine Kennung eines einzelnen Anwendungsservers der Mehrzahl von Anwendungsservern umfasst.

14. Verfahren zur Kommunikation innerhalb eines Kommunikationssystems umfassend ein Endgerät, einen Server eines Telekommunikationsnetzes, der geeignet ist, dem Endgerät mindestens einen Netzdienst bereitzustellen, und mindestens einen Anwendungsserver, der geeignet ist, dem Endgerät über das Telekommunikationsnetz und den Server des Telekommunikationsnetzes Anwendungsdienste bereitzustellen, dieses Kommunikationsverfahren umfassend:

- einen ersten Schritt des Verbindens (E10-E100) des Endgeräts mit dem Server des Netzes umfassend ein Erzeugen, durch das Endgerät und den Server des Netzes, eines Netzsitzungsschlüssels anhand des Netzwurzelschlüssels, der zwischen dem Endgerät und dem Server des Netzes gemeinsam genutzt wird und gegenüber dem Anwendungsserver geheim gehalten wird, wobei dieser Netzsitzungsschlüssel dazu bestimmt ist, zum Signieren und Überprüfen der Integrität von Nachrichten genutzt zu werden, die im Netz zwischen dem Endgerät und dem Server des Netzes ausgetauscht werden;
- einen zweiten Schritt des Verbindens (F10-F120) des Endgeräts mit dem Anwendungsserver, dieser zweite Schritt des Verbindens umfassend ein Erzeugen, durch das Endgerät und den Anwendungsserver, eines Anwendungssitzungsschlüssels anhand des Anwendungswurzelschlüssels, der zwischen dem Endgerät und dem Anwendungsserver gemeinsam genutzt wird und gegenüber dem Server des Netzes geheim gehalten wird, wobei dieser Anwendungssitzungsschlüssel dazu bestimmt ist, zum Ver- und Entschlüsseln der Nachrichten genutzt zu werden, die über das Netz zwischen dem Endgerät und diesem Anwendungsserver ausgetauscht werden;

wobei der mindestens eine zweite Schritt des Verbindens nach dem Abschluss des ersten Schritts des Verbindens durchgeführt wird.

**Claims**

1. Communication system (1) comprising:

- a terminal (2);
- a server (4) of a telecommunications network, capable of providing at least one network service to said terminal; and

- at least one application server (5; 5-1, 5-2, 5-3), capable of providing application services to the terminal via the telecommunications network and the telecommunications network server;

**characterized in that**:

- the terminal (2) and the network server (4) share and store the same "network root key" (NwkKEY) kept secret with regard to the application server (5-1), and are configured for generating from this network root key at least one network session key intended to be used for signing and verifying the integrity of messages exchanged on the network between the terminal and the network server; and
- the terminal (2) and the application server (5-1) share and store the same "application root key" (AppKEY1) kept secret with regard to the network server, and are configured for generating from this application root key at least one application session key intended to be used for encrypting and decrypting messages exchanged between the terminal and this application server via the network.

2. System (1) according to Claim 1, wherein:

- the terminal (2) and the network server (4) are configured for generating a "network session key" during a "network connection procedure" for connecting the terminal to the network;
- the terminal (2) and said application server (5-1) are configured for generating an "application session key" during an "application connection procedure" for connecting the terminal to this application server, said application connection procedure being triggered by the terminal after the completion of the network connection procedure.

3. System according to Claim 1 or 2, wherein the terminal and the network server are configured for generating at least one "network session key" from the network root key during a terminal session refresh procedure.

4. System according to any one of Claims 1 to 3, comprising a plurality of application servers (5-1, 5-2, 5-3) and wherein the terminal shares separate application root keys (AppKEY1, AppKEY2, AppKEY3) with said plurality of application servers, each application root key shared with a said application server being kept secret with regard to the other application servers of said plurality of application servers.

5. System according to Claim 4, wherein the terminal is capable of establishing and maintaining simultaneous connections with said plurality of application servers.

6. System according to Claim 4 or 5, wherein:

- the terminal is configured for sending a single request (G20) to the network server to connect to said plurality of application servers, this single request comprising an identifier of each application server of said plurality of application servers; and
- the network server is configured for sending (G40), following the receipt of the single request, a plurality of requests to said plurality of application servers, the request sent to a said application server being a request for connecting the terminal to this application server.

7. System according to any one of Claims 1 to 6, wherein the network server, the terminal and said at least one application server are configured for implementing the LoRaWAN protocol.

8. Terminal (2) of a communication system (1) comprising said terminal, a telecommunications network server (4) capable of providing at least one network service to the terminal, and at least one application server (5) capable of providing application services to the terminal via the telecommunications network and the telecommunications network server, the terminal comprising:

- a first module for storing (2A) a "network root key" shared with the network server and kept secret with regard to said application server;
- a first generating module (2C), configured for generating from this network root key, at least one "network session key";
- a signing and verifying module (2D), configured for signing and/or verifying messages exchanged between the terminal and the network server by means of the network session key generated by the first generating module;
- a second module for storing (2B) at least one "application root key" shared with the application server, and kept secret with regard to the network server;
- a second generating module (2E) configured for obtaining at least one "application session key" from the application root key shared with the application server; and
- an encryption and decryption module (2F), configured for encrypting and/or decrypting messages exchanged between the terminal and the application server via the network by means of the application session key generated by the second generating module.

9. Terminal according to Claim 8, wherein:

- the first storage module (2A) is included in a network interface module (MOD-NW) of the terminal; and
- the second storage module (2B) is included in an application module (MOD-APP) of the terminal.

10. Terminal according to Claim 9, wherein the first generating module is activated by the network interface module in a "network connection procedure" for connecting the terminal to the network server, and the second module for generating an application session key is activated by the application module of the terminal in an "application connection procedure" for connecting the terminal to the application server, this application connection procedure being implemented by the application module after the completion of the network connection procedure.

11. Terminal according to any one of Claims 8 to 10, wherein the system comprises a plurality of application servers (5-1, 5-2, 5-3) and the second storage module comprises a plurality of separate application root keys shared with said plurality of application servers, each application root key shared with a said application server being kept secret with regard to the other application servers of said plurality of application servers.

12. Terminal according to Claim 11, comprising a transmission module (2G) configured for sending a single request to the network server to connect to said plurality of application servers, this single request comprising an identifier of each application server of said plurality of application servers.

13. Terminal according to Claim 11, comprising a transmission module (2G) configured for sending a plurality of requests to the network server to connect to said plurality of application servers, each request comprising an identifier of a separate application server of said plurality of application servers.

14. Communication method within a communication system comprising a terminal, a telecommunications network server capable of providing at least one network service to the terminal, and at least one application server capable of providing application services to the terminal via the telecommunications network and the telecommunications network server, this communication method comprising:

- a first step of connecting (E10-E100) the terminal to the network server comprising a generation by the terminal and by the network server of a "network session key" from the network root key shared between the terminal and the network server and kept secret with regard to the application server, this network session key being intended to be used for signing and verifying the integrity of messages exchanged on the network between the terminal and the network server;

- a second step of connecting (F10-F120) the terminal to the application server, this second connecting step comprising a generation by the terminal and by the application server of an "application session key" from the application root key shared between the terminal and the application server and kept secret with regard to the network server, this application session key being intended to be used for encrypting and decrypting messages exchanged between the terminal and this application server via the network;

said at least one second connecting step being implemented after the completion of the first connecting step.

**FIG.1**

GW · · · AS 5

**a)**

| PRE | PHDR | PHDR-CRC | PHY-PAYL | CRC |
|-----|------|----------|----------|-----|

| MHDR | MAC-PAYL | MIC |
|------|----------|-----|

| FHDR | FPORT | FRM-PAYL |
|------|-------|----------|

| DEVAdoh | FCtrl | FCnt | FOpts |
|---------|-------|------|-------|

**b)**

| PRE | PHDR | PHDR-CRC | PHY-PAYL | CRC |
|-----|------|----------|----------|-----|

| MHDR | Join-Request Rejoin-Request | MIC |
|------|-----------------------------|-----|

**c)**

| PRE | PHDR | PHDR-CRC | PHY-PAYL | CRC |
|-----|------|----------|----------|-----|

| MHDR | Join-Response Session-Ack | MIC |
|------|---------------------------|-----|

**FIG.2**

| 2 | 4 |
|---|---|

E10

E20

E30

E40

E50

E60

E70

E80

E90

E100

# FIG.3

| 2 | 4 | 5-1 |
|---|---|-----|

F10

F20

F30

F40

F50

F60

F70

F80

F90

F100

F110

F120

# FIG.4

**FIG.5**

FIG.6